(19) Europäisches Patentamt
European Patent Office
Office européen des brevets

(11) EP 0 782 589 B1

(12) **EUROPEAN PATENT SPECIFICATION**

(45) Date of publication and mention of the grant of the patent:
**20.06.2001 Bulletin 2001/25**

(21) Application number: **95932349.4**

(22) Date of filing: **29.08.1995**

(51) Int Cl.7: **C08F 210/16**, C08F 4/603, C08L 23/04, C08J 5/18

(86) International application number:
**PCT/US95/11034**

(87) International publication number:
**WO 96/07680 (14.03.1996 Gazette 1996/12)**

(54) **PLASTIC LINEAR LOW DENSITY POLYETHYLENE**

ELASTISCHES LINEARES POLYETHYLENNIEDRIGER DICHTE

POLYETHYLENE BASSE DENSITE, LINEAIRE ET MALLEABLE

(84) Designated Contracting States:
**AT BE CH DE ES FR GB IT LI NL SE**

(30) Priority: **07.09.1994 US 301948**

(43) Date of publication of application:
**09.07.1997 Bulletin 1997/28**

(73) Proprietor: **THE DOW CHEMICAL COMPANY**
**Midland, Michigan 48674 (US)**

(72) Inventors:
- **LAI, Shih-Yaw**
  **Sugar Land, TX 77479 (US)**
- **WILSON, John, R.**
  **Baton Rouge, LA 70810 (US)**
- **KNIGHT, George, W.**
  **Lake Jackson, TX 77566 (US)**
- **STEVENS, James, C.**
  **Richmond, TX 77469 (US)**
- **CHUM, Pak-Wing, S.**
  **Lake Jackson, TX 77566 (US)**

(74) Representative:
**Smulders, Theodorus A.H.J., Ir. et al**
**Vereenigde**
**Postbus 87930**
**2508 DH Den Haag (NL)**

(56) References cited:
**WO-A-93/08221**
**WO-A-94/09060**
**US-A- 5 241 031**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 782 589 B1

## Description

This invention relates to elastic substantially linear ethylene polymers having improved processability, for example, low susceptibilty to melt fracture, even under high shear stress conditions. Such substantially linear ethylene polymers have a critical shear rate at the onset of surface melt fracture substantially higher than, and a processing index substantially less than, that of a linear polyethylene at the same molecular weight distribution and melt index.

Molecular weight distribution (MWD), or polydispersity, is a well known variable in polymers. The molecular weight distribution, sometimes described as the ratio of weight average molecular weight ($M_w$) to number average molecular weight ($M_n$) (that is, $M_w/M_n$) can be measured directly, for example, by gel permeation chromatography techniques, or more routinely, by measuring $I_{10}/I_2$ ratio, as described in ASTM D-1238. For linear polyolefins, especially linear polyethylene, it is well known that as $M_w/M_n$ increases, $I_{10}/I_2$ also increases.

John Dealy in "Melt Rheology and Its Role in Plastics Processing" (Van Nostrand Reinhold, 1990) page 597 discloses that ASTM D-1238 is employed with different loads in order to obtain an estimate of the shear rate dependence of melt viscosity, which is sensitive to weight average molecular weight ($M_w$) and number average molecular weight ($M_n$).

Bersted in Journal of Applied Polymer Science Vol. 19, page 2167-2177 (1975) theorized the relationship between molecular weight distribution and steady shear melt viscosity for linear polymer systems. He also showed that the broader MWD material exhibits a higher shear rate or shear stress dependency.

Ramamurthy in Journal of Rheology, 30(2), 337-357 (1986), and Moynihan, Baird and Ramanathan in Journal of Non-Newtonian Fluid Mechanics, 36, 255-263 (1990), both disclose that the onset of sharkskin (that is, surface melt fracture) for linear low density polyethylene (LLDPE) occurs at an apparent shear stress of 1-1.4 x $10^6$ dyne/$cm^2$, which was observed to be coincident with the change in slope of the flow curve. Ramamurthy also discloses that the onset of surface melt fracture or of gross melt fracture for high pressure low density polyethylene (HP-LDPE) occurs at an apparent shear stress of about 0.13 MPa (1.3 x $10^6$ dyne/$cm^2$). Ramamurthy also discloses that "the corresponding shear stresses (0.14 and 0.43 MPa) for linear polyethylenes are widely separated." However, these LLDPE resins are linear resins, and are believed to be those made by Union Carbide in their UNIPOL process (which uses conventional Ziegler-Natta catalysis which results in a heterogeneous comonomer distribution). The LLDPE is reported in Tables I and II to have a broad $M_w/M_n$ of 3.9. The melt fracture tests conducted by Ramamurthy were in the temperature range of 190 to 220°C. Furthermore, Ramamurthy reports that the onset of both surface and gross melt fracture (for LLDPE resins) are "... essentially independent of MI (or molecular weight), melt temperature, die dianneter (0.5-2.5 mm), die length/diameter ratio (2-20), and the die entry angle (included angle: 60-180 degrees)."

Kalika and Denn in Journal of Rheology, 31, 815-834 (1987) confirmed the surface defects or sharkskin phenomena for LLDPE, but the results of their work determined a critical shear stress at onset of surface melt fracture of 0.26 MPa, significantly higher than that found by Ramamurthy and Moynihan et al. Kalika and Denn also report that the onset of gross melt fracture occurs at 0.43 MPa which is consistent with that reported by Ramamurthy. The LLDPE resin tested by Kalika and Denn was an antioxidant-modified (of unknown type) UNIPOL LLDPE having a broad $M_w/M_n$ of 3.9. Kalika and Denn performed their melt fracture tests at 215°C. However, Kalika and Denn seemingly differ with Ramamurthy in the effects of their L/D of the rheometer capillary. Kalika and Denn tested their LLDPE at L/D's of 33.2, 66.2, 100.1, and 133.1 (see Table 1 and Figures 5 and 6).

International Patent Application (Publication No. WO 90/03414) published April 5, 1990 to Exxon Chemical Company, discloses linear ethylene interpolymer blends with narrow molecular weight distribution and narrow short chain branching distributions (SCBDs). The melt processibility of the interpolymer blends is controlled by blending different molecular weight interpolymers having different narrow molecular weight distributions and different SCBDs.

Exxon Chemical Company, in the Preprints of Polyolefins VII International Conference, page 45-66, February 24-27 1991, disclose that the narrow molecular weight distribution (NMWD) resins produced by their EXXPOL™ technology have higher melt viscosity and lower melt strength than conventional Ziegler resins at the same melt index. In a recent publication, Exxon Chemical Company has also taught that NMWD polymers made using a single site catalyst create the potential for melt fracture ("New Specialty Linear Polymers (SLP) For Power Cables," by Monica Hendewerk and Lawrence Spenadel, presented at IEEE meeting in Dallas, Texas, September, 1991). In a similar vein, in "A New Family of Linear Ethylene Polymers Provides Enhanced Sealing Performance" by Dirk G. F. Van der Sanden and Richard W. Halle, (February 1992 Tappi Journal), Exxon Chemical Company has also taught that the molecular weight distribution of a polymer is described by the polymers melt index ratio (that is, $I_{10}/I_2$) and that their new narrow molecular weight distribution polymers made using a single site catalyst are "linear backbone resins containing no functional or long chain branches."

USP 5,218,071 (Canadian patent application 2,008,315-A) to Mitsui Petrochemical Industries, Ltd., teaches ethylene copolymers composed of structural units (a) derived from ethylene and structural units (b) derived from alpha-olefins of 3-20 carbons atoms, said ethylene copolymers having [A] a density of 0.85 - 0.92 g/$cm^3$, [B] an intrinsic viscosity as measured in decalin at 135°C of 0.1 - 10 dl/g, [C] a ratio ($M_w/M_n$) of a weight average molecular weight

($M_w$) to a number average molecular weight ($M_n$) as measured by GPC of 1.2-4, and [D] a ratio ($MFR_{10}/MFR_2$) of $MFR_{10}$ under a load of 10 kg to MFR2 under a load of 2.16 kg at 190°C of 8-50, and being narrow in molecular weight distribution and excellent in flowability. However, the ethylene copolymers of USP '071 are made with a catalysis system composed of methylaluminoxane and ethyleneis(indenyl)hafnium dichloride (derived from $HfCl_4$ containing 0.78 percent by weight of zirconium atoms as contaminates). It is well known that mixed metal atom catalyst species (such as hafnium and zirconium in USP'071) polymerizes copolymer blends, which are evidenced by multiple melting peaks. Such copolymer blends therefore are not homogeneous in terms of their branching distribution.

WO 85/04664 to BP Chemicals Ltd. teaches a process for the thermo-mechanical treatment of copolymers of ethylene and higher alpha-olefins of the linear low density polyethylene type with at least one or more organic peroxides to produce copolymers that are particularly well suited for extrusion or blow-molding into hollow bodies and sheathing. These treated copolymers show an increased flow parameter ($I_{21}/I_2$) without significantly increasing the $M_w/M_n$. However, the novel polymers of the present invention have long chained branching and obtained this desirable result without the need of a peroxide treatment.

U.S. Patent 5,096,867 discloses various ethylene polymers made using a single site catalyst in combinations with methyl aluminoxane. These polymers, in particular Example 47, have extremely high levels of aluminum resulting from catalyst residue. When these aluminum residues are removed from the polymer, the polymer exhibits gross melt fracture at a critical shear stress of less than ($4x10^6$ dyne/$cm^2$) 40 N/$cm^2$.

WO-A-93/08221 and WO-A-94/09060 describe polymers as defined in the preamble of claim 1. These polymers are prepared while using aluminum compounds in the preparation process as cocatalysts and/or as scavengers. The present invention forms an improvement over the teaching of these international applications.

Previously known narrow molecular weight distribution linear polymers disadvantageously possessed low shear sensitivity or low $I_{10}/I_2$ value, which limits the extrudability of such polymers. Additionally, such polymers possessed low melt elasticity, causing problems in melt fabrication such as film forming processes or blow molding processes (for example, sustaining a bubble in the blown film process, or sag in the blow molding process etc.) Finally, such resins also experienced melt fracture surface properties at relatively low extrusion rates thereby processing unacceptably.

A new class of homogeneous ethylene polymers have now been discovered which have long chain branching and unusual but desirable bulk properties. These new polymers include both homopolymers of ethylene and interpolymers of ethylene and at least one alpha-olefin. Both the homo- and interpolymers have long chain branching, but the interpolymers have short chain branching in addition to the long chain branching. The short chain branches are the residue of the alpha-olefins that are incorporated into the polymer backbone or in other words, the short chain branches are that part of the alpha-olefin not incorporated into the polymer backbone. The length of the short chain branches is two carbon atoms less than the length of the alpha-olefin comonomer. The short chain branches are randomly, that is uniformly, distributed throughout the polymer as opposed to heterogeneously branched ethylene/alpha-olefin interpolymers such as conventional Ziegler LLDPE.

These novel ethylene polymers have a shear thinning and ease of processability similar to highly branched low density polyethylene (LDPE), but with the strength and toughness of linear low density polyethylene (LLDPE). These novel ethylene polymers can also be characterized as "substantially linear" polymers, whereby the bulk polymer has an average of up to about 3 long chain branches/1000 total carbons or in other words, at least some of the polymer chains have long chain branching. The novel substantially linear ethylene polymers are distinctly different from traditional Ziegler polymerized heterogeneous polymers (for example, LLDPE) and are also different from traditional free radical/high pressure polymerized LDPE. Surprisingly, the novel substantially linear ethylene polymers are also different from linear homogeneous ethylene polymers having a uniform comonomer distribution, especially with regard to processability.

According to the present invention, it has been found that the bulk properties of the polymer composition as described in the preamble of claim 1 can be improved by taking steps to have the aluminum content of the bulk polymer on a value of less than 20 ppm.

Hence, the present invention is directed to an aluminum containing bulk polymer including homogeneous ethylene homo- or interpolymers which interpolymers are formed with at least one a-olefin, which homo- or interpolymers have 0.01-3 long chain branches per 1000 carbon atoms, have a melt flow ratio, $I_{10}/I_2$, ≥5.63, have a molecular weight distribution, $M_w/M_n$, of from 1.5 to 2.5, and have a single melting point as determined by differential scanning calory metry between -30°C and 150°C, characterized in that the bulk polymer contains less than 20 ppm aluminum.

In a preferred embodiment the bulk polymer contains less than 10 ppm, even more preferably less than 5 ppm.

The bulk polymer preferably has a critical shear rate at the onset of surface melt fracture at least 50 percent greater than the critical shear rate at the onset of surface melt fracture of a linear ethylene polymer having an $I_2$, $M_w/M_n$ and density within 10 percent of the ethylene homo- or interpolymer. In a further preferred embodiment the bulk polymer of the invention has a critical shear stress at the onset of gross melt fracture greater than 40 N/$cm^2$ ($4x10^6$ dyne/$cm^2$). Further, the bulk polymer of the invention preferably is an ethylene homo- or interpolymer having $M_w/M_n$

of from 1.7 to 2.3.

In a further embodiment, the invention relates to a fabricated article comprising the bulk polymer of the invention.

Preferably, this fabricated article is a film, a fiber, a sheet, a woven fabric, a nonwoven fabric, a molded article or a wire and cable coating. Most preferable, this fabricated article is a blown film, preferably of a bulk polymer having a density from 0.90 to 0.92 g/cm$^3$.

Finally, the fabricated article of the invention is in the form of a film having a seal strength equal to or higher than a film made from a heterogeneous Ziegler polymerized polymer at the same heat seal temperature, wherein the melt index, molecular weight distribution and density of the heterogeneous Ziegler polymerized polymer and the ethylene homo- or interpolymer as defined in claim 1 are within 10 percent of one another.

The novel ethylene polymers, forming an essential part of the bulk polymer of the invention, especially those with a density greater than or equal to 0.9 g/cm$^3$, are characterized as having:

a) melt flow ratio, $I_{10}/I_2$, ≥ 5.63,
b) a molecular weight distribution, $M_w/M_n$, defined by the equation: $M_w/M_n \leq (I_{10}/I_2)$ -4.63,
c) a critical shear stress at onset of gross melt fracture greater than 40 N/cm$^2$ (4x10$^6$ dyne/cm$^2$), and
d) a single melt peak as determined by differential scanning calorimetry (DSC) between -30 and 150°C.

These ethylene polymers can also be characterized as having:

a) melt flow ratio, $I_{10}/I_2$, ≥ 5.63,
b) a molecular weight distribution, $M_w/M_n$, defined by the equation: $M_w/M_n \leq (I_{10}/I_2)$ -4.63,
c) a critical shear rate at onset of surface melt fracture at least 50 percent greater than the critical shear rate at the onset of surface melt fracture of a linear ethylene polymer with an $I_2$, $M_w/M_n$, and density each within ten percent of the novel ethylene polymer, and
d) a single melt peak as determined by differential scanning calorimetry (DSC) between -30 and 150°C.

Further, these ethylene polymers, especially those having a density greater than or equal to about 0.9 g/cm$^3$, are characterized as having:

a) melt flow ratio, $I_{10}/I_2$, ≥ 5.63, and
b) a molecular weight distribution, $M_w/M_n$ of from 1.5 to 2.5,
c) a critical shear stress at onset of gross melt fracture greater than 40 N/cm$^2$ (4x10$^6$ dyne/cm$^2$), and
d) a single melt peak as determined by differential scanning calorimetry (DSC) between -30 and 150°C.

Moreover, these novel ethylene polymers are characterized as having:

a) a melt flow ratio, $I_{10}/I_2$, ≥ 5.63,
b) a molecular weight distribution, $M_w/M_n$ of from 1.5 to 2.5,
c) a critical shear rate at onset of surface melt fracture of at least 50 percent greater than the critical shear rate at the onset of surface melt fracture of a linear ethylene polymer with an $I_2$, $M_w/M_n$, and density each within ten percent of the novel ethylene polymer, and
d) a single melt peak as determined by differential scanning calorimetry (DSC) between -30 and 150°C.

The substantially linear ethylene polymers forming an essential part of the bulk polymer of the invention can also be characterized as having a critical shear rate at onset of surface melt fracture of at least 50 percent greater than the critical shear rate at the onset of surface melt fracture of a linear ethylene polymer having an $I_2$, $M_w/M_n$ and density each within ten percent of the substantially linear ethylene polymer.

Alternatively, this polymer can be characterized as a substantially linear ethylene bulk polymer having:

(a) an average of 0.01 to 3 long chain branches/1000 total carbons,
(b) a critical shear stress at onset of gross melt fracture of greater than 40 N/cm$^2$ (4 x 10$^6$ dyne/cm$^2$), and
(c) a single DSC melt peak between -30 and 150°C.

The substantially linear ethylene bulk polymer can also be characterized as having:

(a) an average of 0.01 to 3 long chain branches/1000 total carbons,
(b) a critical shear rate at onset of surface melt fracture of at least 50 percent greater than the critical shear rate

at the onset of surface melt fracture of a linear ethylene polymer having an $I_2$, $M_w/M_n$ and density each within ten percent of the substantially linear ethylene bulk polymer, and
(c) a single DSC melt peak between -30 and 150°C.

In still another aspect, the ethylene polymer can be characterized as a substantially linear ethylene bulk polymer having:

(a) an average of 0.01 to 3 long chain branches/1000 total carbons,
(b) a melt flow ratio, $I_{10}/I_2$, ≥ 5.63,
(c) a molecular weight distribution, $M_w/M_n$, from 1.5 to 2.5, and
(d) a single DSC melt peak between -30 and 150°C.

The ethylene polymers, especially the substantially linear ethylene polymers, also have a processing index (PI) less than or equal to 70 percent of the PI of a linear ethylene polymer at about the same $I_2$, $M_w/M_n$, and density each within ten percent of the novel ethylene polymer.

Compositions comprising the ethylene polymer defined in claim 1 and at least one other natural or synthetic polymer are also within the scope of the invention.

Elastic substantially linear ethylene polymers comprising ethylene homopolymers or an interpolymer of ethylene with at least one $C_3$-$C_{20}$ alpha-olefin copolymers are especially preferred.

Figure 1 is a schematic representation of a polymerization process suitable for making the polymers forming part of the bulk polymer of the present invention.

Figure 2 plots data describing the relationship between $I_{10}/I_2$ and $M_w/M_n$ for two reference examples of the invention, and for some comparative examples.

Figure 3 plots the shear stress versus shear rate for a reference Example of the invention and for a Comparative Example, described herein.

Figure 4 plots the shear stress versus shear rate for a reference Example of the invention and for a Comparative Example, described herein.

Figure 5 plots the heat seal strength versus heat seal temperature of film made from reference Examples of the invention, and for Comparative Examples, described herein.

Figure 6 graphically displays dynamic shear viscosity data for an elastic Figure 6 graphically displays dynamic shear viscosity data for an elastic substantially linear ethylene polymer forming part of the bulk polymer of the present invention and for a comparative linear polymer made using single site catalyst technology.

Figure 7 graphically displays $I_{10}/I_2$ ratio as a function of ethylene concentration in the polymerization reactor for ethylene/propene substantially linear copolymers forming part of the bulk polymer of the invention.

Figure 8 graphically displays the melting curves for a comparative polymer made according to USP 5,218,071 (Mitsui).

Figure 9 graphically displays the structural characteristics of a traditional heterogeneous Ziegler polymerized LLDPE copolymers, a highly branched high pressure-free radical LDPE, and a substantially linear ethylene/alpha-olefin copolymer forming part of the bulk polymer of the invention.

The term "linear" as used herein means that the ethylene polymer does not have long chain branching. Thatis, the polymer chains comprising the bulk linear ethylene polymer have an absence of long chain branching, as for example the traditional linear low density polyethylene polymers or linear high density polyethylene polymers made using Ziegler polymerization processes (for example, USP 4,076,698 (Anderson et al.)), sometimes called heterogeneous polymers. The term "linear" does not refer to bulk high pressure branched polyethylene, ethylene/vinyl acetate copolymers, or ethylene/vinyl alcohol copolymers which are known to those skilled in the art to have numerous long chain branches. The term "linear" also refers to polymers made using uniform branching distribution polymerization processes, sometimes called homogeneous polymers, including narrow MWD (for example about 2) made using single site catalysts. Such uniformly branched or homogeneous polymers include those made as described in USP 3,645,992 (Elston) and those made using so-called single site catalysts in a batch reactor having relatively high ethylene concentrations (as described in U.S. Patent 5,026,798 (Canich) or in U.S. Patent 5,055,438 (Canich)) or those made using constrained geometry catalysts in a batch reactor also having relatively high olefin concentrations (as described in U. S. Patent 5,064,802 (Stevens et al.) or in EP 0 416 815 A2 (Stevens et al.)). The uniformly branched/homogeneous polymers are those polymers in which the comonomer is randomly distributed within a given interpolymer molecule or chain, and wherein substantially all of the interpolymer molecules have the same ethylene/comonomer ratio within that interpolymer, but these polymers too have an absence of long chain branching, as, for example, Exxon Chemical has taught in their February 1992 Tappi Journal paper. For example, Figure 9 shows the structural differences among conventional heterogeneously branched LLDPE, homogeneously branched linear LLDPE, highly branched high pressure, free radical LDPE, and the homogeneously branched substantially linear ethylene polymers of the present invention.

The term "substantially linear" as used means that the bulk polymer is substituted, on average, with 0.01 long chain branches/1000 total carbons (including both backbone and branch carbons) to 3 long chain branches/1000 total carbons. Preferred polymers are substituted with 0.01 long chain branches/1000 total carbons to 1 long chain branches/1000 total carbons, more preferably from 0.05 long chain branches/1000 total carbons to 1 long chain branched/1000 total carbons, and especially from 0.3 long chain branches/1000 total carbons to 1 long chain branches/1000 total carbons.

As used herein, the term "backbone" refers to a discrete molecule, and the term "polymer" or "bulk polymer" refers in the conventional sense to the polmer as formed in a reactor. For the polymer to be a "substantially linear" polymer, the polymer must have at least enough molecules with long chain branching such that the average long chain branching in the bulk polymer is at least an average of 0.01/1000 total carbons.

The term "bulk" polymer means the polymer which results from the polymerization process and, for the substantially linear polymers, includes molecules having both an absence of long chain branching, as well as molecules having long chain branching. Thus a "bulk" polymer includes all molecules formed during polymerization. It is understood that, for the substantially linear polymers, not all molecules have long chain branching, but a sufficient amount do such that the average long chain branching content of the bulk polymer positively affects the melt rheology (that is, the melt fracture properties).

Long chain branching (LCB) is defined herein as a chain length of at least one (1) carbon less than the number of carbons in the comonomer, whereas short chain branching (SCB) is defined herein as a chain length of the same number of carbons in the residue of the comonomer after it is incorporated into the polymer molecule backbone. For example, an ethylene/1-octene substantially linear polymer has backbones with long chain branches of at least seven (7) carbons in length, but it also has short chain branches of only six (6) carbons in length.

Long chain branching can be distinguished from short chain branching by using $^{13}C$ nuclear magnetic resonance (NMR) spectroscopy and to a limited extent, for example for ethylene homopolymers, it can be quantified using the method of Randall (Rev. Macromol.Chem. Phys., C29 (2&3), p. 285-297). However as a practical matter, current $^{13}C$ nuclear magnetic resonance spectroscopy cannot determine the length of a long chain branch in excess of six (6) carbon atoms and as such, this analytical technique cannot distinguish between a seven (7) carbon branch and a seventy (70) carbon branch. The long chain branch can be as long as about the same length as the length of the polymer back-bone.

USP 4,500,648 teaches that long chain branching frequeny (LCB) can be represented by the equation LCB=b/$M_w$ wherein b is the weight average number of long chain branches per molecule and $M_w$ is the weight average molecular weight. The molecular weight averages and the long chain branching characteristics are determined by gel permeation chromatography and intrinsic viscosity methods.

Similar to the traditional homogeneous polymers, the substantially linear ethylene/alpha-olefin copolymers of the invention have only a single melting point, as opposed to traditional Ziegler polymerized heterogeneous linear ethylene/alpha-olefin copolymers which have two or more melting points (determined using differential scanning calorimetry (DSC)). Ethylene polymers of this invention are also characterized by a single DSC melting peak between -30 and 150°C. However, those polymers having a density of 0.875 g/cm$^3$ to 0.91 g/cm$^3$, the single melt peak may show, depending on equipment sensitivity, a "shoulder" or a "hump" on the low side of the melting peak (that is below the melting point) that constitutes less than 12 percent, typically, less than 9 percent, more typically less than 6 percent of the total heat of fusion of the polymer. This artifact is due to intrapolymer chain variations, and it is discerned on the basis of the slope of the single melting peak varying monotonically through the melting region of the artifact. Such artifact occurs within 34°C, typically within 27°C, and more typically within 20°C of the melting point of the single melting peak. The single melting peak is determined using a differential scanning calorimeter standardized with indium and deionized water. The method involves about 5-7 mg sample sizes, a "first heat" to about 150°C which is held for 4 minutes, a cool down at 10°C/min. to -30°C which is held for 3 minutes, and heat up at 10°C/min. to 150°C for the "second heat" heat flow vs. temperature curve. Total heat of fusion of the polymer is calculated from the area under the curve. The heat of fusion attributable to this artifact, if present, can be determined using an analytical balance and weight-percent calculations.

Figure 8 displays the melting curves for a polymer of the invention and for a comparative polymer as described in USP 5,218,071 (Mitsui). Note that the comparative polymer has two melting peaks (the high melting peak with a shoulder on its high side, that is above the second melting point), and this is indicative of the presence of two distinct polymers (as opposed to the melting curve of the invention polymer having only a single melting peak).

The SCBDI (Short Chain Branch Distribution Index) or CDBI (Composition Distribution Branch Index) is defined as the weight percent of the polymer molecules having a comonomer content within 50 percent of the median total molar comonomer content. The CDBI of a polymer is readily calculated from data obtained from techniques known in the art, such as, for example, temperature rising elution fractionation (abbreviated herein as "TREF') as described, for example, in Wild et al, Journal of Polymer Science, Poly. Phys. Ed., Vol. 20, p. 441 (1982), or as described in U.S.

Patent 4,798,081. The SCBDI or CDBI for the substantially linear ethylene polymers of the present invention is typically greater than 30 percent, preferably greater than 50 percent, more preferably greater than 80 percent, and most preferably greater than 90 percent.

"Melt tension" is measured by a specially designed pulley transducer in conjunction with the melt indexer. Melt tension is the load that the extrudate or filament exerts while passing over the pulley onto a two inch drum that is rotating at the standard speed of 30 rpm. The melt tension measurement is similar to the "Melt Tension Tester" made by Toyoseiki and is described by John Dealy in "Rheometers for Molten Plastics", published by Van Nostrand Reinhold Co. (1982) on page 250-251. The melt tension of these new polymers is also surprisingly good, for example, as high as 2 grams or more. For the novel substantially linear ethylene interpolymers of this invention, especially those having a very narrow molecular weight distribution (that is, $M_w/M_n$ from 1.5 to 2.5), the melt tension is typically at least 5 percent, and can be as much as 60 percent, greater than the melt tension of a conventional linear ethylene interpolymer having a melt index, polydispersity and density each within ten percent of the substantially linear ethylene polymer.

A unique characteristic of the presently claimed polymers is a highly unexpected flow property where the $I_{10}/I_2$ value is essentially independent of polydispersity index (that is $M_w/M_n$). This is contrasted with conventional Ziegler polymerized heterogeneous polyethylene resins and with conventional single site catalyst polymerized homogeneous polyethylene resins having rheological properties such that as the polydispersity index increases, the $I_{10}/I_2$ value also increases.

The density of the neat ethylene or substantially linear ethylene polymers of this invention, that is polymers without inorganic fillers and not containing in excess of 20 ppm aluminum from catalyst residue, is measured in accordance with ASTM D-792. The ethylene or substantially linear ethylene polymers are crystalline and/or semi-crystalline polymers, are normally solid at room temperature, and are pelletizable at ambient conditions or at temperatures induced by cooled water. For example, a novel substantially linear ethylene/1-octene copolymer having a density of 0.865 g/cm$^3$ has about 10 percent crystallinity at room temperature. The minimum density is typically at least 0.865 g/cm$^3$, preferably at least 0.870 g/cm$^3$, and more preferably at least 0.900 g/cm$^3$. The maximum density typically does not exceed 0.970 g/cm$^3$, preferably it does not exceed 0.940 g/cm$^3$, and more preferably it does not exceed 0.92 g/cm$^3$.

The molecular weight of the ethylene or ethylene/alpha-olefin substantially linear ethylene polymers in the present invention is conveniently indicated using a melt index measurement according to ASTM D-1238, Condition 190 C/2.16 kg (formally known as "Condition (E)" and also known as $I_2$). Melt index is inversely proportional to the molecular weight of the polymer. Thus, the higher the molecular weight, the lower the melt index, although the relationship is not linear. The melt index for the ethylene or ethylene/alpha-olefin substantially linear ethylene polymers used herein is generally from 0.01 grams/10 minutes (g/10 min) to 1000 g/10 min, preferably from 0.01 g/10 min to 100 g/10 min, and especially from 0.01 g/10 min to 10 g/10 min.

Another measurement useful in characterizing the molecular weight of the substantially linear ethylene polymers is conveniently indicated using a melt index measurement according to ASTM D-1238, Condition 190C/10 kg (formerly known as "Condition (N)" and also known as $I_{10}$). The ratio of these two melt index terms is the melt flow ratio and is designated as $I_{10}/I_2$. For the substantially linear ethylene/alpha-olefin polymers of the invention, the $I_{10}/I_2$ ratio indicates the degree of long chain branching, that is, the higher the $I_{10}/I_2$ ratio, the more long chain branching in the polymer. Generally, the $I_{10}/I_2$ ratio of the substantially linear ethylene/alpha-olefin polymers is at least 5.63, preferably at least 7, especially at least 8, most especially at least 9 or above. The only limitations on the maximum $I_{10}/I_2$ ratio are practical considerations such as economics, polymerization kinetics, etc., but typically the maximum $I_{10}/I_2$ ratio does not exceed 20, and preferably it does not exceed 15.

Antioxidants (for example, hindered phenolics (for example, Irganox® 1010 made by Ciba Geigy Corp.), phosphites (for example, Irgafos® 168 made by Ciba Geigy Corp.)), are preferably added to protect the polymer from degradation during thermal processing steps such as pelletization, molding, extrusion, and characterization methods. Other additives to serve special functional needs include cling additives, for example PIB, antiblocks, antislips, pigments, and fillers. In-process additives, for example calcium stearate, water, etc., may also be used for other purposes such as for the deactivation of residual catalyst. However, peroxide need not be added to the novel polymers in order for the polymers to exhibit an $I_{10}/I_2$ independent of the MWD and the melt fracture properties.

Molecular Weight Distribution Determination

The whole interpolymer product samples and the individual interpolymer samples are analyzed by gel permeation chromatography (GPC) on a Waters 150 C high temperature chromatographic unit equipped with three linear mixed porosity bed columns (available from Polymer Laboratories), operating at a system temperature of 140°C. The solvent is 1,2,4-trichlorobenzene, from which 0.3 percent by weight solutions of the samples are prepared for injection. The flow rate is 1.0 milliliters/minute and the injection size is 200 microliters.

The molecular weight determination is deduced by using narrow molecular weight distribution polystyrene standards (from Polymer Laboratories) in conjunction with their elution volumes. The equivalent polyethylene molecular

weights are determined by using appropriate Mark-Houwink coefficients for polyethylene and polystyrene (as described by Williams and Ward in Journal of Polymer Science, Polymer Letters, Vol. 6, (621) 1968) to derive the following equation:

$$M_{polyethylene} = a * (M_{polystyrene})^b.$$

In this equation, a = 0.4316 and b = 1.0 for polyethylene and polystyrene in 1,2,4-trichlorobenzene. Weight average molecular weight, $M_w$, is calculated in the usual manner according to the following formula: $M_w = \Sigma\, w_i^* M_i$, where $w_i$ and $M_i$ are the weight fraction and molecular weight, respectively, of the $i^{th}$ fraction eluting from the GPC column.

The molecular weight distribution ($M_w/M_n$) for the substantially linear ethylene polymers of the invention is generally less than 5, preferably from 1.5 to 2.5, and especially from 1.7 to 2.3.

Processing Index Determination

The "rheological processing index" (PI) is the apparent viscosity (in kpoise) of a polymer and is measured by a gas extrusion rheometer (GER). The GER is described by M. Shida, R.N. Shroff and L.V. Cancio in Polym. Eng. Sci., Vol. 17, no. 11, p. 770 (1977), and in "Rheometers for Molten Plastics" by John Dealy, published by Van Nostrand Reinhold Co. (1982) on page 97-99. The processing index is measured at a temperature of 190°C, at nitrogen pressure of 17.3 MPa (2500 psig) using a 752 micrometers (0.0296 inch) diameter (preferably 363 micrometers (0.0143 inch) diameter die for high flow polymers, for example 50 - 100 melt index or greater), 20:1 L/D die having an entrance angle of 180 degrees. The GER processing index is calculated in millipoise units from the following equation:

$$PI = 2.15 \text{ X } 10^6 \text{ dyne/cm}^2/(1000 \text{ X shear rate}),$$

where: $2.15 \text{ X } 10^6$ dyne/$cm^2$ is the shear stress (at 2500 psig), and the shear rate is the shear rate at the wall as represented by the following equation:
$32\ Q'/\ (60 \text{ sec/min})(0.745)(\text{Diameter X } 2.54 \text{ cm/in})^3$, where:

Q' is the extrusion rate (gms/min),
0.745 is the melt density of polyethylene (gm/$cm^3$), and
Diameter is the orifice diameter of the capillary (inches).

The PI is the apparent viscosity of a material measured at apparent shear stress of $2.15 \times 10^6$ dyne/$cm^2$.

For the substantially linear ethylene polymers (or ethylene/alpha-olefin copolymers or interpolymers), the PI is less than or equal to 70 percent of that of a conventional linear ethylene polymer (or ethylene/alpha-olefin copolymer or interpolymer) having an $I_2$, $M_w/M_n$ and density each within ten percent of the substantially linear ethylene polymer.

An apparent shear stress vs. apparent shear rate plot is used to identify the melt fracture phenomena over a range of nitrogen pressures from 36.3 MPa to 3.55 MPa (5250 to 500 psig) using the die or GER test apparatus previously described. According to Ramamurthy in Journal of Rheology, 30(2), 337-357, 1986, above a certain critical flow rate, the observed extrudate irregularities may be broadly classified into two main types: surface melt fracture and gross melt fracture.

Surface melt fracture occurs under apparently steady flow conditions and ranges in detail from loss of specular gloss to the more severe form of "sharkskin". In this disclosure, the onset of surface melt fracture is characterized at the beginning of losing extrudate gloss at which the surface roughness of extrudate can only be detected by 40X magnification. The critical shear rate at onset of surface melt fracture for the substantially linear ethylene polymers is at least 50 percent greater than the critical shear rate at the onset of surface melt fracture of a linear ethylene polymer having about the same $I_2$ and $M_w/M_n$. Preferably, the critical shear stress at onset of surface melt fracture for the substantially linear ethylene polymers of the invention is greater than $2.8 \times 10^6$ dyne/$cm^2$.

Gross melt fracture occurs at unsteady flow conditions and ranges in detail from regular (alternating rough and smooth, helical, etc.) to random distortions. For commercial acceptability, (for example, in blown film products), surface defects should be minimal, if not absent. The critical shear rate at onset of surface melt fracture (OSMF) and critical shear stress at onset of gross melt fracture (OGMF) will be used herein based on the changes of surface roughness and configurations of the extrudates extruded by a GER. For the substantially linear ethylene polymers of the invention, the critical shear stress at onset of gross melt fracture is preferably greater than $4 \times 10^6$ dyne/$cm^2$.

For the processing index deterination and for the GER melt fracture determination, the novel ethylene or substantially linear ethylene copolymers are tested without inorganic fillers, and they do not have more than 20 ppm

aluminum catalyst residue. Preferably, however, for the processing index and melt fracture tests, the novel ethylene polymers and substantially linear ethylene copolymers do contain antioxidants such as phenols, hindered phenols, phosphites or phosphonites, preferably a combination of a phenol or hindered phenol and a phosphite or a phosphonite.

The Constrained Geometry Catalyst

Suitable constrained geometry catalysts for use herein preferably include constrained geometry catalysts as disclosed in U.S. Application Serial Nos.: 545,403, filed July 3, 1990; 758,654, filed September 12, 1991; 758,660, filed September 12, 1991; and 720,041, filed June 24, 1991. The monocyclopentadienyl transition metal olefin polymerization catalysts taught in USP 5,026,798 are also believed to be suitable for use in preparing the polymers of the present invention, so long as the polymerization conditions substantially conform to those described herein.

The foregoing catalysts may be further described as comprising a metal coordination complex comprising a metal of groups 3-10 or the Lanthanide series of the Periodic Table of the Elements and a delocalized π-bonded moiety substituted with a constrain-inducing moiety, said complex having a constrained geometry about the metal atom such that the angle at the metal between the centroid of the delocalized, substituted π-bonded moiety and the center of at least one remaining substituent is less than such angle in a similar complex containing a similar π-bonded moiety lacking in such constrain-inducing substituent, and provided further that for such complexes comprising more than one delocalized, substituted π-bonded moiety, only one thereof for each metal atom of the complex is a cyclic, delocalized, substituted π-bonded moiety. The catalyst further comprises an activating cocatalyst.

Preferred catalyst complexes correspond to the formula:

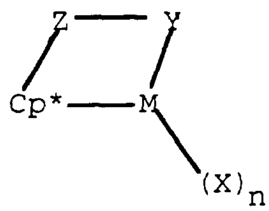

wherein:

M is a metal of group 3-10, or the Lanthanide series of the Periodic Table of the Elements;
Cp* is a cyclopentadienyl or substituted cyclopentadienyl group bound in an $\eta^5$ bonding mode to M;
Z is a moiety comprising boron, or a member of group 14 of the Periodic Table of the Elements, and optionally sulfur or oxygen, said moiety having up to 20 non-hydrogen atoms, and optionally Cp* and Z together form a fused ring system;
X independently each occurrence is an anionic ligand group or neutral Lewis base ligand group having up to 30 non-hydrogen atoms;
n is 0, 1, 2, 3, or 4 and is 2 less than the valence of M; and
Y is an anionic or nonanionic ligand group bonded to Z and M comprising nitrogen, phosphorus, oxygen or sulfur and having up to 20 non-hydrogen atoms, optionally Y and Z together form a fused ring system.

More preferably still, such complexes correspond to the formula:

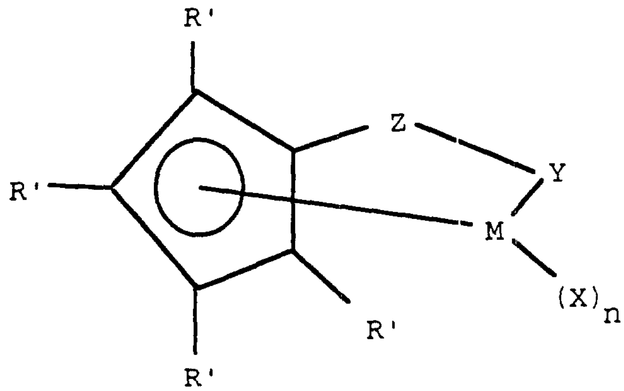

wherein:

R' each occurrence is independently selected from the group consisting of hydrogen, alkyl, aryl, silyl, germyl, cyano, halo and combinations thereof having up to 20 non-hydrogen atoms;
X each occurrence independently is selected from the group consisting of hydride, halo, alkyl, aryl, silyl, germyl, aryloxy, alkoxy, amide, siloxy, neutral Lewis base ligands and combinations thereof having up to 20 non-hydrogen atoms;
Y is -O-, -S-, $-NR^*-$, $-PR^*-$, or a neutral two electron donor ligand selected from the group consisting of $OR^*$, $SR^*$, $NR^*_2$ or $PR^*_2$;
M is as previously defined; and
Z is $SiR^*_2$, $CR^*_2$, $SiR^*_2SiR^*_2$, $CR^*_2CR^*_2$, $CR^*=CR^*$, $CR^*_2SiR^*_2$, $GeR^*_2$, $BR^*$, $BR^*_2$; wherein
R* each occurrence is independently selected from the group consisting of hydrogen, alkyl, aryl, silyl, halogenated alkyl, halogenated aryl groups having up to 20 non-hydrogen atoms, and mixtures thereof, or two or more R* groups from Y, Z, or both Y and Z form a fused ring system; and n is 1 or 2.

It should be noted that whereas formula I and the following formulas indicate a cyclic structure for the catalysts, when Y is a neutral two electron donor ligand, the bond between M and Y is more accurately referred to as a coordinate-covalent bond. Also, it should be noted that the complex may exist as a dimer or higher oligomer.
Further preferably, at least one of R', Z, or R* is an electron donating moiety. Thus, highly preferably Y is a nitrogen or phosphorus containing group corresponding to the formula -N(R")- or -P(R")-, wherein R" is $C_{1-10}$ alkyl or aryl, that is, an amido or phosphido group.
Most highly preferred complex compounds are amidosilane- or amidoalkanediyl-compounds corresponding to the formula:

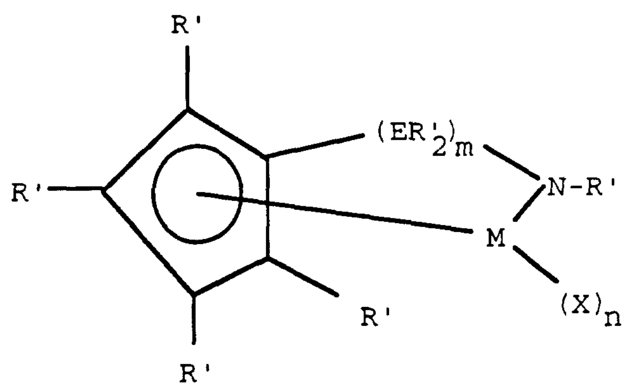

wherein:

M is titanium, zirconium or hafnium, bound in an $\eta^5$ bonding mode to the cyclopentadienyl group;
R' each occurrence is independently selected from the group consisting of hydrogen, silyl, alkyl, aryl and combinations thereof having up to 10 carbon or silicon atoms;
E is silicon or carbon;
X independently each occurrence is hydride, halo, alkyl, aryl, aryloxy or alkoxy of up to 10 carbons;
m is 1 or 2; and
n is 1 or 2.

Examples of the above most highly preferred metal coordination compounds include compounds wherein the R' on the amido group is methyl, ethyl, propyl, butyl, pentyl, hexyl, (including isomers), norbornyl, benzyl, phenyl, etc.; the cyclopentadienyl group is cyclopentadienyl, indenyl, tetrahydroindenyl, fluorenyl, octahydrofluorenyl, etc.; R' on the foregoing cyclopentadienyl groups each occurrence is hydrogen, methyl, ethyl, propyl, butyl, pentyl, hexyl, (including isomers), norbornyl, benzyl, phenyl, etc.; and X is chloro, bromo, iodo, methyl, ethyl, propyl, butyl, pentyl, hexyl, (including isomers), norbornyl, benzyl, phenyl, etc. Specific compounds include: (tert-butylamido)(tetramethyl-$\eta^5$-cyclopentadienyl)-1,2-ethylanediylzirconium dichloride, (tert-butylamido)(tetramethyl- $\eta^5$-cyclopentadienyl)-1,2-ethanediyltitanium dichloride, (methylamido)(tetramethyl- $\eta^5$-cyclopentadienyl)-1,2-ethanediylzirconium dichloride, (methylamido)(tetramethyl-$\eta^5$-cyclopentadienyl)-1,2-ethanediyltitanium dichloride, (ethylamido)(tetramethyl- $\eta^5$-cyclopentadienyl)-methylenetitanium dichloro, (tertbutylamido)dibenzyl(tetramethyl- $\eta^5$-cyclopentadienyl) silanezirconium dibenzyl, (benzylamido)dimethyl- (tetramethyl- $\eta^5$-cyclopentadienyl)silanetitanium dichloride, (phenylphosphido)dimethyl (tetramethyl-$\eta^5$-cyclopentadienyl)silanezirconium dibenzyl, and (tertbutylamido)dimethyl(tetramethyl-$\eta^5$-cyclopentadienyl)silanetitanium dimethyl.

The complexes may be prepared by contacting a derivative of a metal, M, and a group I metal derivative or Grignard derivative of the cyclopentadienyl compound in a solvent and separating the salt byproduct Suitable solvents for use in preparing the metal complexes are aliphatic or aromatic liquids such as cyclohexane, methylcyclohexane, pentane, hexane, heptane, tetrahydrofuran, diethyl ether, benzene, toluene, xylene, ethylbenzene, etc., or mixtures thereof.

In a preferred embodiment, the metal compound is $MX_{n+1}$, that is, M is in a lower oxidation state than in the corresponding compound, $MX_{n+2}$ and the oxidation state of M in the desired final complex. A noninterfering oxidizing agent may thereafter be employed to raise the oxidation state of the metal. The oxidation is accomplished merely by contacting the reactants utilizing solvents and reaction conditions used in the preparation of the complex itself. By the term "noninterfering oxidizing agent" is meant a compound having an oxidation potential sufficient to raise the metal oxidation state without interfering with the desired complex formation or subsequent polymerization processes. A particularly suitable noninterfering oxidizing agent is AgCl or an organic halide such as methylene chloride. Such techniques are described in WO-93/08221.

Suitable cocatalysts for use herein include polymeric or oligomeric aluminoxanes, especially methyl aluminoxane, as well as inert, compatible, noncoordinating, ion forming compounds. So called modified methyl aluminoxane (MMAO) is also suitable for use as a cocatalyst. One technique for preparing such modified aluminoxane is disclosed in USP 5,041,584. Aluminoxanes can also be made as disclosed in USP 5,218,071; 5,086,024, 5,041,585, 5,041,583, 5,015,749, 4,960,878 and 4,544,762. Aluminoxanes, including modified methyl aluminoxanes, when used in the polymerization, are preferably used such that preferably less than about 20 ppm aluminum, especially less than about 10 ppm aluminum, and more preferably less than about 5 ppm aluminum, from catalyst residue remain in the polymer. In order to measure the bulk polymer properties (for example PI or melt fracture), aqueous HCl is used to extract the aluminoxane from the polymer. Preferred cocatalysts, however, are inert, noncoordinating, boron compounds such as those described in EP 520732.

Ionic active catalyst species which can be used to polymerize the polymers described herein correspond to the formula:

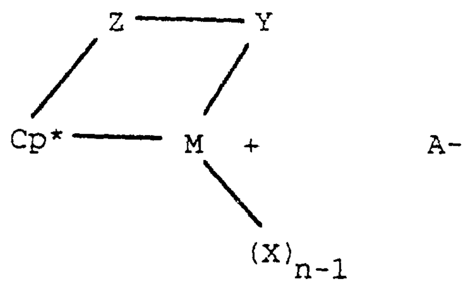

wherein:

M is a metal of group 3-10, or the Lanthanide series of the Periodic Table of the Elements;
Cp* is a cyclopentadienyl or substituted cyclopentadienyl group bound in an $\eta^5$ bonding mode to M;
Z is a moiety comprising boron, or a member of group 14 of the Periodic Table of the Elements, and optionally sulfur or oxygen, said moiety having up to 20 non-hydrogen atoms, and optionally Cp* and Z together form a fused ring system;
X independently each occurrence is an anionic ligand group or neutral Lewis base ligand group having up to 30 non-hydrogen atoms;
n is 0, 1, 2, 3, or 4 and is 2 less than the valence of M; and
A- is a noncoordinating, compatible anion.

One method of making the ionic catalyst species which can be utilized to make the polymers of the present invention involve combining:

a) at least one first component which is a mono(cyclopentadienyl) derivative of a metal of Group 3-10 or the Lanthanide Series of the Periodic Table of the Elements containing at least one substituent which will combine with the cation of a second component (described hereinafter) which first component is capable of forming a cation formally having a coordination number that is one less than its valence, and
b) at least one second component which is a salt of a Bronsted acid and a noncoordinating, compatible anion.

More particularly, the non-coordinating, compatible anion of the Bronsted acid salt may comprise a single coordination complex comprising a charge-bearing metal or metalloid core, which anion is both bulky and non-nucleophilic. The recitation "metalloid", as used herein, includes non-metals such as boron and phosphorus which exhibit semi-metallic characteristics.

Illustrative, but not limiting examples of monocyclopentadienyl metal components (first components) which may be used in the preparation of cationic complexes are derivatives of titanium, zirconium, vanadium, hafnium, chromium, lanthanum, etc. Preferred components are titanium or zirconium compounds. Examples of suitable monocyclopentadienyl metal compounds are hydrocarbyl-substituted monocyclopentadienyl metal compounds such as (tert-butylamido)(tetramethyl-$\eta^5$-cyclopentadienyl)-1,2-ethanediylzirconium dimethyl, (tert-butylamido)(tetramethyl-$\eta^5$-cyclopentadienyl)-1,2-ethanediyltitanium dimethyl, (methylamido)(tetramethyl-$\eta^5$-cyclopentadienyl)-1,2-ethanediylzirconium dibenzyl, (methylamido)(tetramethyl-$\eta^5$-cyclopentadienyl)-1,2-ethanediyltitanium dimethyl, (ethylamido)(tetramethyl-$\eta^5$-cyclopentadienyl)methylenetitanium dimethyl, (tertbutylamido)dibenzyl(tetramethyl-$\eta^5$-cyclopentadienyl) silanezirconium dibenzyl, (benzylamido)dimethyl-(tetramethyl-$\eta^5$-cyclopentadienyl)silanetitanium diphenyl, (phenylphosphido)dimethyl(tetramethyl-$\eta^5$-cyclopentadienyl)silanezirconium dibenzyl.

Such components are readily prepared by combining the corresponding metal chloride with a dilithium salt of the substituted cyclopentadienyl group such as a cyclopentadienyl-alkanediyl, cyclopentadienyl--silane amide, or cyclopentadienyl-phosphide compound. The reaction is conducted in an inert liquid such as tetrahydrofuran, $C_{5-10}$ alkanes, toluene, etc. utilizing conventional synthetic procedures. Additionally, the first components may be prepared by reaction of a group II derivative of the cyclopentadienyl compound in a solvent and separating the salt by-product. Magnesium derivatives of the cyclopentadienyl compounds are preferred. The reaction may be conducted in an inert solvent such as cyclohexane, pentane, tetrahydrofuran, diethyl ether, benzene, toluene, or mixtures of the like. The resulting metal cyclopentadienyl halide complexes may be alkylated using a variety of techniques. Generally, the metal cyclopentadienyl alkyl or aryl complexes may be prepared by alkylation of the metal cyclopentadienyl halide complexes with alkyl or aryl derivatives of group I or group II metals. Preferred alkylating agents are alkyl lithium and Grignard derivatives using conventional synthetic techniques. The reaction may be conducted in an inert solvent such as cyclohexane, pentane, tetrahydrofuran, diethyl ether, benzene, toluene, or mixtures of the like. A preferred solvent is a mixture of toluene and tetrahydrofuran.

Compounds useful as a second component in the preparation of the ionic catalysts useful in this invention will comprise a cation, which is a Bronsted acid capable of donating a proton, and a compatible noncoordinating anion. Preferred anions are those containing a single coordination complex comprising a charge-bearing metal or metalloid core which anion is relatively large (bulky), capable of stabilizing the active catalyst species (the Group 3-10 or Lanthanide Series cation) which is formed when the two components are combined and sufficiently labile to be displaced by olefinic, diolefinic and acetylenically unsaturated substrates or other neutral Lewis bases such as ethers, nitriles and the like. Suitable metals, then, include, but are not limited to, aluminum, gold, platinum and the like. Suitable metalloids include, but are not limited to, boron, phosphorus, silicon and the like. Compounds containing anions which comprise coordination complexes containing a single metal or metalloid atom are, of course, well known and many, particularly such compounds containing a single boron atom in the anion portion, are available commercially. In light of this, salts containing anions comprising a coordination complex containing a single boron atom are preferred.

Highly preferably, the second component useful in the preparation of the catalysts of this invention may be represented by the following general formula:

$$(L\text{-}H)+ [A]-$$

wherein:

L is a neutral Lewis base;
(L-H)+ is a Bronsted acid; and
$[A]^-$ is a compatible, noncoordinating anion.

More preferably $[A]^-$ corresponds to the formula:

$$[M'Q_q]^-$$

wherein:

M' is a metal or metalloid selected from Groups 5-15 of the Periodic Table of the Elements; and
Q independently each occurrence is selected from the Group consisting of hydride, dialkylamido, halide, alkoxide, aryloxide, hydrocarbyl, and halo substituted-hydrocarbyl radicals of up to 20 carbons with the proviso that in not more than one occurrence is Q halide and
q is one more than the valence of M'.

Second components comprising boron which are particularly useful in the preparation of catalysts of this invention may be represented by the following general formula:

$$[L\text{-}H]^+ [BQ_4]^-$$

wherein:

L is a neutral Lewis base;
$[L\text{-}H]^+$ is a Bronsted acid;
B is boron in a valence state of 3; and
Q is as previously defined.

Illustrative, but not limiting, examples of boron compounds which may be used as a second component in the preparation of the improved catalysts of this invention are trialkyl-substituted ammonium salts such as triethylammonium tetraphenylborate, tripropylammonium tetraphenylborate, tris(n-butyl)ammonium tetraphenylborate, trimethylammonium tetrakis(p-tolyl)borate, tributylammonium tetrakis(pentafluorophenyl)borate, tripropylammonium tetrakis (2,4-dimethylphenyl)borate, tributylammonium tetrakis(3,5-dimethylphenyl)borate, triethylammonium tetrakis(3,5-di-trifluoromethylphenyl)borate and the like. Also suitable are N,N-dialkyl anilinium salts such as N,N-dimethyl-aniliniumtetraphenylborate, N,N-diethylanilinium tetraphenylborate, N,N-2,4,6-pentamethylanilinium tetraphenylborate and

the like; dialkylammonium salts such as di-(i-propyl)ammonium tetrakis(pentafluorophenyl)borate, dicyclohexylammonium tetraphenylborate and the like; and triaryl phosphonium salts such as triphenylphosphonium tetraphenylborate, tri(methylphenyl)phosphonium tetrakispentafluorophenylborate, tri(dimethylphenyl)phosphonium tetraphenylborate and the like.

Preferred ionic catalysts are those having a limiting charge separated structure corresponding to the formula:

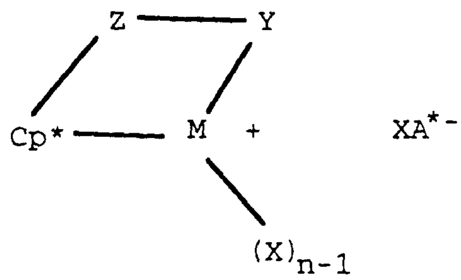

wherein:

M is a metal of group 3-10, or the Lanthanide series of the Periodic Table of the Elements;
Cp* is a cyclopentadienyl or substituted cyclopentadienyl group bound in an $\eta^5$ bonding mode to M;
Z is a moiety comprising boron, or a member of group 14 of the Periodic Table of the Elements, and optionally sulfur or oxygen, said moiety having up to 20 non-hydrogen atoms, and optionally Cp* and Z together form a fused ring system;
X independently each occurrence is an anionic ligand group or neutral Lewis base ligand group having up to 30 non-hydrogen atoms;
n is 0, 1, 2, 3, or 4 and is 2 less than the valence of M; and
$XA^{*}$- is $-XB(C_6F_5)_3$.

This class of cationic complexes may be conveniently prepared by contacting a metal compound corresponding to the formula:

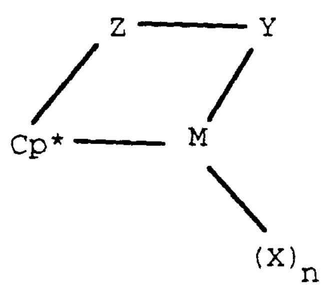

wherein:

Cp*, M, and n are as previously defined,

with tris(pentafluorophenyl)borane cocatalyst under conditions to cause abstraction of X and formation of the anion $-XB(C_6F_5)_3$.

Preferably X in the foregoing ionic catalyst is $C_1$-$C_{10}$ hydrocarbyl, most preferably methyl.

The preceding formula is referred to as the limiting, charge separated structure. However, it is to be understood that, particularly in solid form, the catalyst may not be fully charge separated. That is, the X group may retain a partial covalent bond to the metal atom, M. Thus, the catalysts may be alternately depicted as possessing the formula:

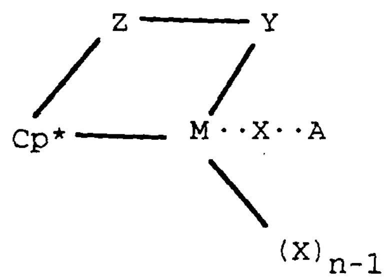

The catalysts are preferably prepared by contacting the derivative of a Group 4 or Lanthanide metal with the tris(pentafluorophenyl)borane in an inert diluent such as an organic liquid. Tris(pentafluorophenyl)borane is a commonly available Lewis acid that may be readily prepared according to known techniques. The compound is disclosed in Marks, et al. J. Am. Chem. Soc. 1991,113,3623-3625 for use in alkyl abstraction of zirconocenes.

All reference to the Periodic Table of the Elements herein shall refer to the Periodic Table of the Elements, published and copyrighted by CRC Press, Inc., 1989. Also, any reference to a Group or Groups shall be to the Group or Groups as reflected in this Periodic Table of the Elements using the IUPAC system for numbering groups.

It is believed that in the constrained geometry catalysts used herein the metal atom is forced to greater exposure of the active metal site because one or more substituents on the single cyclopentadienyl or substituted metal is both bonded to an adjacent covalent moiety and held in association with the cyclopentadienyl group through an $\eta^5$ or other $\pi$-bonding interaction. It is understood that each respective bond between the metal atom and the constituent atoms of the cyclopentadienyl or substituted cyclopentadienyl group need not be equivalent. That is, the metal may be symmetrically or unsymmetrically $\pi$-bound to the cyclopentadienyl or substituted cyclopentadienyl group.

The geometry of the active metal site is further defined as follows. The centroid of the cyclopentadienyl or substituted cyclopentadienyl group may be defined as the average of the respective X, Y, and Z coordinates of the atomic centers forming the cyclopentadienyl or substituted cyclopentadienyl group. The angle, $\Theta$, formed at the metal center between the centroid of the cyclopentadienyl or substituted cyclopentadienyl group and each other ligand of the metal complex may be easily calculated by standard techniques of single crystal X-ray diffraction. Each of these angles may increase or decrease depending on the molecular structure of the constrained geometry metal complex. Those complexes wherein one or more of the angles, $\Theta$, is less than in a similar, comparative complex differing only in the fact that the constrain inducing substituent is replaced by hydrogen, have constrained geometry for purposes of the present invention. Preferably one or more of the above angles, $\Theta$, decrease by at least 5 percent, more preferably 7.5 percent, compared to the comparative complex. Highly preferably, the average value of all bond angles, $\Theta$, is also less than in the comparative complex.

Preferably, monocyclopentadienyl metal coordination complexes of group 4 or lanthanide metals according to the present invention have constrained geometry such that the smallest angle, $\Theta$, between the centroid of the $Cp^*$ group and the Y substituent, is less than 115 degrees, more preferably less than 110 degrees, most preferably less than 105 degrees, and especially less than 100 degrees.

Other compounds which are useful in the catalyst compositions of this invention, especially compounds containing other Group 4 or Lanthanide metals, will, of course, be apparent to those skilled in the art.

Polymerization

The improved melt elasticity and processibility of the substantially linear polymers forming part of the bulk polymer according to the present invention result, it is believed, from their method of production. The polymers may be produced via a continuous (as opposed to a batch) controlled polymerization process using at least one reactor (for example, as disclosed in WO 93/07187, WO 93/07188, and WO 93/07189), but can also be produced using multiple reactors (for example, using a multiple reactor configuration as described in USP 3,914,342) at a polymerization temperature and pressure sufficient to produce the interpolymers having the desired properties.

While not wishing to be bound by any particular theory, the inventors believe that long chain branches are formed in their novel polymers according to the following sequence:

Propagation Step

$$R\text{-}(C_2H_4) + \text{Catalyst} \rightarrow R\text{-}C_2H_4\text{-Catalyst}$$

Termination Step

$$R\text{-}C_2H_4\text{-Catalyst} \rightarrow R\text{-}CH{=}CH_2 \text{ (beta-hydride elimination)}$$

Copolymerization

$$R\text{-}CH_2\text{-}CH_2\text{-}CHR'\text{-}CH_2\text{-Catalyst} \rightarrow R\text{-}CH_2\text{-}CH_2\text{-}CHR'\text{-}CH_2\text{-Catalyst}$$

Continued Polymerization

$$R\text{-}CH_2\text{-}CH_2\text{-}CHR'\text{-}CH_2\text{-Catalyst} + (C_2H_4)_x \rightarrow$$

$$R\text{-}CHR'(CH_2CH_2)_x\text{-Catalyst}$$

Termination Step

$$1)\ R\text{-}CHR'(CH_2CH_2)_x\text{-Catalyst} + \text{Heat} \rightarrow$$

$$R\text{-}CHR'R''CH{=}CH_2 + H\text{-Catalyst}$$

$$2)\ R\text{-}CHR'(CH_2CH_2)_x\text{-Catalyst} + H_2 \rightarrow$$

$$R\text{-}CHR'R'' + H\text{-Catalyst}$$

wherein:

R = growing polymer chain
R'= long chain branch (LCB), and
R"= growing polymer chain after insertion of R".

In polymerizing ethylene and ethylene/alpha-olefin copolymers, a batch reactor process typically operates at an ethylene concentration from 6.7 to 12.5 percent by weight of the reactor contents and have a polymer concentration generally less than 5 percent by weight of the reactor contents, dependent upon the ethylene solubility, which is a function of reactor diluent, temperature and pressure. The initital polymer concentration is zero and increases over time as the reaction proceeds such that the highest polymer concentration occurs at the end of the reaction, the point at which the catalyst is spent. Most of the polymer is made during the initial minutes of the polymerization.

According to one embodiment of the above process, the polymers are produced in a continuous process operated at a steady state (that is the reactants are fed to the reactor at a rate in substantially in balance with the rate

that product is removed from the reactor such that the reaction mass in the reactor is relatively constant in volume and composition), as opposed to a batch process. Preferably, the polymerization temperature or the continuous process is from about 20°C to about 250°C, using constrained geometry catalyst technology. If a narrow molecular weight distribution polymer ($M_w/M_n$ of from 1.5 to 25) having a higher $I_{10}/I_2$ ratio (for example $I_{10}/I_2$ of 7 or more, preferably at least 8, especially at least 9 and as high as 20 or more) is desired, the ethylene concentration in the reactor is preferably not more than 8 percent by weight of the reactor contents, especially not more than 6 percent by weight of the reactor contents, and most especially not more than 4 percent by weight of the reactor contents, and as low as 0.75 percent by weight of the reactor contents. Preferably, the polymerization is performed in a solution polymerization process. Generally, manipulation of $I_{10}/I_2$ while holding $M_w/M_n$ relatively low for producing the novel polymers described herein is a function of reactor temperature and/or ethylene concentration. Surprisingly, reduced ethylene concentration and higher temperature generally produces higher $I_{10}/I_2$. Generally, as the percent of ethylene is converted into polymer, the ethylene concentration in the reactor decreases and the polymer concentration increases. For the novel substantially linear ethylene/alpha-olefin copolymers and substantially linear ethylene homopolymers claimed herein, the polymer concentration for a continuous solution polymerization process is preferably above 5 weight percent of the reactor contents, especially above 15 weight percent of the reactor contents, and as high as 40 weight percent of the reactor contents. Typically greater than 70 percent, preferably greater than 80 percent and more preferably greater than 90 percent, of the ethylene is converted to polymer.

The substantially linear polymers forming part of the bulk polymer of the present invention can be ethylene homopolymers, or they can be interpolymers of ethylene with at least one $C_3$-$C_{20}$ alpha-olefin and/or $C_4$-$C_{18}$ diolefins. The substantially linear polymers of the present invention can also be interpolymers of ethylene with at least one of the above $C_3$-$C_{20}$ alpha-olefins and/or diolefins in combination with other unsaturated monomers.

Monomers usefully copolymerized or interpolymerized with ethylene according to the present invention include, for example, ethylenically unsaturated monomers, conjugated or nonconjugated dienes, polyenes, etc. Preferred comonomers include the $C_3$-$C_{10}$ alpha-olefins especially propene, isobutylene, 1-butene, 1-hexene, 4-methyl-1-pentene, and 1-octene. Other preferred monomers include styrene, halo- or alkyl substituted styrenes, vinylbenzocyclobutene, 1,4-hexadiene, and naphthenics (for example, cyclo-pentene, cyclo-hexene and cyclo-octene).

Other unsaturated monomers usefully copolymerized according to the present invention include, for example, ethylenically unsaturated monomers, conjugated or nonconjugated dienes, polyenes, etc. Preferred comonomers include the $C_3$-$C_{10}$ alpha-olefins especially propene, isobutylene, 1-butene, 1-hexene, 4-methyl-1-pentene, and 1-octene. Other preferred comonomers include styrene, halo- or alkyl substituted styrenes, vinylbenzocyclobutene, 1,4-hexadiene, and naphthenics (for example, cyclopentene, cyclohexene and cyclooctene).

The polymerization conditions for manufacturing the polymers of the present invention are generally those useful in the solution polymerization process, although the application of the present invention is not limited thereto. Slurry and gas phase polymerization processes are also believed to be useful, provided the proper catalysts and polymerization conditions are employed.

Multiple reactor polymerization processes are also useful in the present invention, such as those disclosed in USP 3,914,342. The multiple reactors can be operated in series or in parallel, with at least one constrained geometry catalyst employed in at least one of the reactors.

In general, the continuous polymerization according to the present invention may be accomplished at conditions well known in the prior art for Ziegler-Natta or Kaminsky-Sinn type polymerization reactions, that is, temperatures from 0 to 250°C and pressures from atmospheric to 1000 atmospheres (100 MPa). Suspension, solution, slurry, gas phase or other process conditions may be employed if desired. A support may be employed, but preferably the catalysts are used in a homogeneous (that is, soluble) manner. It will, of course, be appreciated that the active catalyst system form in situ if the catalyst and the cocatalyst components thereof are added directly to the polymerization process and a suitable solvent or diluent, including condensed monomer, is used in said polymerization process. It is, however, preferred to form the active catalyst in a separate step in a suitable solvent prior to adding the same to the polymerization mixture.

The polymerization conditions for manufacturing the polymers forming part of the bulk polymer of the present invention are generally those useful in the solution polymerization process, although the application of the present invention is not limited thereto. Gas phase polymerization processes are also believed to be useful, provided the proper catalysts and polymerization conditions are employed.

Fabricated articles made from the bulk polymers may be prepared using all of the conventional polyethylene processing techniques. Useful articles include films (for example, cast, blown and extrusion coated), fibers (for example, staple fibers (including use of a novel ethylene polymer disclosed herein as at least one component comprising at least a portion of the fiber's surface), spunbond fibers or melt blown fibers (using, for example, systems as disclosed in USP 4,340,563, USP 4,663,220, USP 4,668,566, or USP 4,322,027), and gel spun fibers (for example, the system disclosed in USP 4,413,110)), both woven and nonwoven fabrics (for example, spunlaced fabrics disclosed in USP 3,485,706) or structures made from such fibers (including, for example, blends of these fibers with other fibers, for example, PET

or cotton) and molded articles (for example, made using an injection molding process, a blow molding process or a rotomolding process). The new polymers described herein are also useful for wire and cable coating operations, impact modification, especially at low temperatures, of thermoplastic olefins (for example, polypropylene), as well as in sheet extrusion for vacuum forming operations, dosed cell and open cell foams (including radiation and chemically crosslinked foams and foam structures), and adhesives.

Useful compositions are also suitably prepared comprising the substantially linear polymers of the present invention and at least one other natural or synthetic polymer. Preferred other polymers include thermoplastics such as styrene-butadiene block copolymers, polystyrene (including high impact polystyrene), ethylene vinyl acetate copolymers, ethylene acrylic add copolymers, other olefin copolymers (especially polyethylene copolymers) and homopolymers (for example, those polyethylene copolymers and homopolymers made using conventional heterogeneous catalysts). Examples of such heterogeneous polyethylene polymers and copolymers include polymers made by the process of USP 4,076,698, other linear or substantially linear polymers of the present invention, and mixtures thereof. Other substantially linear polymers of the present invention and conventional heterogeneously branched HDPE and/or heterogeneously branched LLDPE are preferred for use in the thermoplastic compositions.

The compositions comprising the substantially linear ethylene polymers are formed by any convenient method, including dry blending the individual components and subsequently melt mixing, either directly in the extruder used to make the finished article (for example, film), or by pre-melt mixing in a separate extruder. The polyethylene compositions may also be prepared by multiple reactor polymerization techniques. For example, one reactor may polymerize the constrained geometry catalyzed polyethylene and another reactor polymerize the heterogeneous catalyzed polyethylene, either in series or in parallel operation.

Compositions comprising the ethylene polymers can also be formed into fabricated articles such as those previously mentioned using conventional polyethylene processing techniques which are well known to those skilled in the art of polyethylene processing.

For examples described herein, unless otherwise stipulated, all procedures were performed under an inert atmosphere of nitrogen or argon. Solvent choices were often optional, for example, in most cases either pentane or 30-60 petroleum ether can be interchanged. Amines, silanes, lithium reagents, and Grignard reagents were purchased from Aldrich Chemical Company. Published methods for preparing tetramethylcyclopentadiene ($C_5Me_4H_2$) and lithium tetramethylcyclopentadienide ($Li(C_5Me_4H)$) include C M. Fendrick et al. Organometallics, 3, 819 ( 1984). Lithiated substituted cyclopentadienyl compounds may be typically prepared from the corresponding cyclopentadiene and a lithium reagent such as n-butyl lithium. Titanium trichloride ($TiCl_3$) was purchased from Aldrich Chemical Company. The tetrahydrofuran adduct of titanium trichloride, $TiCl_3(THF)_3$, was prepared by refluxing $TiCl_3$ in THF overnight, cooling, and isolating the blue solid product, according to the procedure of L. E. Manzer, Inorg. Syn., 21, 135 (1982).

Reference Examples 1-4

The metal complex solution for Reference Example 1 was prepared as follows:

Part 1: Prep of $Li(C_5Me_4H)$

In the drybox, a 3L 3-necked flask was charged with 18.34 g of $C_5Me_4H_2$, 800 mL of pentane, and 500 mL of ether. The flask was topped with a reflux condenser, a mechanical stirrer, and a constant addition funnel container 63 mL of 2.5 M n-BuLi in hexane. The BuLi was added dropwise over several hours. A very thick precipitate formed; approx. 1000 mL of additional pentane had to be added over the course of the reaction to allow stirring to continue. After the addition was complete, the mixture was stirred overnight. The next day, the material was filtered, and the solid was thoroughly washed with pentane and then dried under reduced pressure. 14.89 g of $Li(C_5Me_4H)$ was obtained (78 percent).

Part 2: Prep of $C_5Me_4HSiMe_2Cl$

In the drybox 30.0 g of $Li(C_5Me_4H)$ was placed in a 500 mL Schlenk flask with 250 mL of THF and a large magnetic stir bar. A syringe was charged with 30 mL of $Me_2SiCl_2$ and the flask and syringe were removed from the drybox. On the Schlenk line under a flow of argon, the flask was cooled to -78°C, and the $Me_2SiCl_2$ added in one rapid addition. The reaction was allowed to slowly warm to room temperature and stirred overnight. The next morning the volatile materials were removed under reduced pressure, and the flask was taken into the drybox. The oily material was extracted with pentane, filtered, and the pentane was removed under reduced pressure to leave the $C_5Me_4HSiMe_2Cl$ as a clear yellow liquid (46.83 g; 92.9 percent).

Part 3: Prep of $C_5Me_4HSiMe_2NH^tBu$

In the drybox, a 3-necked 2 L flask was charged with 37.4 g of t-butylamine and 210 mL of THF. $C_5Me_4HSiMe_2Cl$ (25.47 g) was slowly dripped into the solution over 3-4 hours. The solution turned cloudy and yellow. The mixture was stirred overnight and the volatile materials removed under reduced pressure. The residue was extracted with diethyl ether, the solution was filtered, and the ether removed under reduced pressure to leave the $C_5Me_4HSiMe_2NH^tBu$ as a clear yellow liquid (26.96 g; 90.8 percent).

Part 4: Prep of $[MgCl]_2[Me_4C_5SiMe_2N^tBu](THF)_x$

In the drybox, 14.0 mL of 2.0 M isopropylmagnesium chloride in ether was syringed into a 250 mL flask. The ether was removed under reduced pressure to leave a colorless oil. 50 mL of a 4:1 (by volume) toluene:THF mixture was added followed by 3.50 g of $Me_4HC_5SiMe_2NH^tBu$. The solution was heated to reflux. After refluxing for 2 days, the solution was cooled and the volatile materials removed under reduced pressure. The white solid residue was slurried in pentane and filtered to leave a white powder, which was washed with pentane and dried under reduced pressure. The white powder was identified as $[MgCl]_2[Me_4C_5SiMe_2N^tBu](THF)_x$ (yield: 6.7 g).

Part 5: Prep of $[C_5Me_4(SiMe_2N^tBu)]TiCl_2$

In the drybox, 0.50 g of $TiCl_3(THF)_3$ was suspended in 10 mL of THF. 0.69 g of solid $[MgCl]_2[Me_4C_5SiMe_2N^tBu](THF)_x$ was added, resulting in a color change from pale blue to deep purple. After 15 minutes, 0.35 g of AgCl was added to the solution. The color immediately began to lighten to a pale green/yellow. After 1.5 hours, the THF was removed under reduced pressure to leave a yellow-green solid. Toluene (20 mL) was added, the solution was filtered, and the toluene was removed under reduced pressure to leave a yellow-green solid, 0.51 g (quantitative yield) identified by 1H NMR as $[C_5Me_4(SiMe_2N^tBu)]TiCl_2$.

Part 6: Preparation of $[C_5Me_4(SiMe_2N^tBu)]TiMe_2$

In an inert atmosphere glove box, 9.031 g of $[C_5Me_4(Me_2SiN^tBu)]TiCl_2$ was charged into a 250 ml flask and dissolved into 100 ml of THF. This solution was cooled to about -25°C by placement in the glove box freezer for 15 minutes. To the cooled solution was added 35 ml of a 1.4 M MeMgBr solution in toluene/THF (75/25). The reaction mixture was stirred for 20 to 25 minutes followed by removal of the solvent under vacuum. The resulting solid was dried under vacuum for several hours. The product was extracted with pentane (4x50 ml) and filtered. The filtrate was combined and the pentane removed under vacuum giving the catalyst as a straw yellow solid.

The metal complex, $[C_5Me_4(SiMe_2N^tBu)]TiMe_2$, solution for Examples 2 and 3 was prepared as follows:

In an inert atmosphere glove box 10.6769 g of a tetrahydrofuran adduct of titanium trichloride, $TiCl_3(THF)_3$, was loaded into a 1 L flask and slurried into 300 ml of THF. To this slurry, at room temperature, was added 17.402 g of $[MgCl]_2$ $[N^tBuSiMe_2C_5Me_4]$ $(THF)_x$ as a solid. An additional 200 ml of THF is used to help wash this solid into the reaction flask. This addition resulted in an immediate reaction giving a deep purple solution. After stirring for 5 minutes 9.23 ml of a 1.56 M solution of $CH_2Cl_2$ in THF was added giving a quick color change to dark yellow. This stage of the reaction was allowed to stir for about 20 to 30 minutes. Next, 61.8 ml of a 1.4 M MeMgBr solution in toluene/THF(75/25) was added via syringe. After about 20 to 30 minutes stirring time the solvent was removed under vacuum and the solid dried. The product was extracted with pentane (8x50ml) and filtered. The filtrate was combined and the pentane removed under vacuum giving the metal complex as a tan solid.

The metal complex, $[C_5Me_4(SiMe_2N^tBu)]TiMe_2$, solution for Example 4 was prepared as follows:

In an inert atmosphere glove box 4.8108 g of $TiCl_3(THF)_3$ was placed in a 500 ml flask and slurried into 130 ml of THF. In a separate flask 8.000 g of $[MgCl]_2[N^tBuSiMe_2C_5Me_4](THF)_x$ was dissolved into 150 ml of THF. These flasks were removed from the glove box and attached to a vacuum line and the contents cooled to -30°C. The THF solution of $[MgCl]_2[N^tBuSiMe_2C_5Me_4](THF)_x$ was transferred (over a 15 minute period) via cannula to the flask containing the $TiCl_3(THF)_3$ slurry. This reaction was allowed to stir for 1.5 hours over which time the temperature warmed to 0°C and the solution color turned deep purple. The reaction mixture was cooled back to -30°C and 4.16 ml of a 1.56 M $CH_2Cl_2$ solution in THF was added. This stage of the reaction was stirred for an additional 1.5 hours and the temperature warmed to -10°C. Next, the reaction mixture was again cooled to -40°C and 27.81 ml of a 1.4 M MeMgBr solution in toluene/THF (75/25) was added via syringe and the reaction was allowed to warm slowly to room temperature over 3 hours. After this time the solvent was removed under vacuum and the solid dried. At this point the reaction flask was brought back into the glove box where the product was extracted with pentane (4x50 ml) and filtered. The filtrate was combined and the pentane removed under vacuum giving the catalyst as a tan solid. The metal complex was then dissolved into a mixture of $C_8$-$C_{10}$ saturated hydrocarbons (for example, Isopar™ E, made by Exxon) and ready for

use in polymerization.

Polymerization

The polymer products of Reference Examples 1-4 were produced in a solution polymerization process using a continuously stirred reactor. Additives (for example, antioxidants, pigments, etc.) can be incorporated into the interpolymer products either during the pelletization step or after manufacture, with a subsequent re-extrusion. Examples 1-4 were each stabilized with 1250 ppm calcium stearate, 200 ppm Irganox 1010, and 1600 ppm Irgafos 168. Irgafos™ 168 is a phosphite stabilizer and Irganox™ 1010 is a hindered polyphenol stabilizer (for example, tetrakis [methylene 3-(3,5-ditert.butyl-4-hydroxyphenylpropionate)]methane). Both are trademarks of and made by Ciba-Geigy Corporation. A representative schematic for the polymerization process is shown in Figure 1.

The ethylene (4) and the hydrogen were combined into one stream (15) before being introduced into the diluent mixture (3). Typically, the diluent mixture comprises a mixture of $C_8$-$C_{10}$ saturated hydrocarbons (1), (for example, Isopar™ E, made by Exxon) and the comonomer(s) (2). For Reference Example 1, the comonomer is 1-octene. The reactor feed mixture (6) was continuously injected into the reactor (9). The metal complex (7) and the cocatalyst (8) (the cocatalyst is tris(pentafluorophenyl)borane for Reference Examples 1-4 herein which forms the ionic catalyst in situ) were combined into a single stream and also continuously injected into the reactor. Sufficient residence time was allowed for the metal complex and cocatalyst to react to the desired extent for use in the polymerization reactions, at least about 10 seconds. For the polymerization reactions of Reference Examples 1-4, the reactor pressure was held constant at about 3.48 MPa (490 psig). Ethylene content of the reactor, after reaching steady state, was maintained below about 8 percent.

After polymerization, the reactor exit stream (14) was introduced into a separator (10) where the molten polymer was separated from the unreacted comonomer(s), unreacted ethylene, unreacted hydrogen, and diluent mixture stream (13). The molten polymer was subsequently strand chopped or pelletized and, after being cooled in a water bath or pelletizer (11), the solid pellets were collected (12). Table 1 describes the polymerization conditions and the resultant polymer properties:

| Reference Example | 1* | 2 | 3 | 4 |
|---|---|---|---|---|
| Ethylene feed rate, kg/hr (lbs/hour) | 1.5 (3.2) | 1.7 (3.8) | 1.7 (3.8) | 1.7 (3.8) |
| Comonomer/Total Olefin ratio*, mole percent | 12.3 | 0 | 0 | 0 |
| Hydrogen/ethylene ratio, mole percent | 0.054 | 0.072 | 0.083 | 0.019 |
| Diluent/ethylene ratio, weight basis | 9.5 | 7.4 | 8.7 | 8.7 |
| Metal complex conc., molar | 0.00025 | 0.0005 | 0.001 | 0.001 |
| Metal complex flow rate, ml/min | 5.9 | 1.7 | 2.4 | 4.8 |
| Cocatalyst conc., molar | 0.001 | 0.001 | 0.002 | 0.002 |
| Cocatalyst flow rate, ml/min | 2.9 | 1.3 | 6 | 11.9 |
| Reactor temp, °C | 114 | 160 | 160 | 200 |
| Polymer conc. in the reactor exit stream, weight percent | 7.1 | 8.4 | 9.5 | 8.4 |
| Comonomer conc. in the reactor exit stream, weight percent | 3.8 | 0 | 0 | 0 |
| Ethylene conc. in the reactor exit stream, weight percent | 2.65 | 3.59 | 0.86 | 1.98 |

*For Reference Example 1, the Comonomer/Total Olefin ratio is defined as the percentage molar ratio of 1-octene/(1-octene + ethylene). Ex. 1* shows a copolymer that has onset of gross melt fracture less than 40 $N/cm^2$ ($4 \times 10^6$ $dyne/cm^2$).

(continued)

| Reference Example | 1* | 2 | 3 | 4 |
|---|---|---|---|---|
| Product $I_2$, g/10 minutes | 1.22 | 0.96 | 1.18 | 0.25 |
| Product density, g/cm$^3$ | 0.903 | 0.954 | 0.954 | 0.953 |
| Product $I_{10}/I_2$ | 6.5 | 7.4 | 11.8 | 16.1 |
| Single DSC Melting Peak, °C | 97 | 132 | 131 | 132 |
| Product $M_w$ | 95,400 | 93,800 | 71,600 | 105,800 |
| Product $M_n$ | 50,000 | 48,200 | 34,200 | 51,100 |
| Product $M_w/M_n$ | 1.91 | 1.95 | 2.09 | 2.07 |
| Ethylene Conversion, percent | 71 | 70 | 92 | 81 |
| LCB/Chain | N.M.** | - | 0.53 | 0.66 |
| LCB/10,000 Carbons | N.M.** | - | 2.2 | 1.8 |
| Aluminium Residue, ppm | 0 | 0 | 0 | 0 |

*For Reference Example 1, the Comonomer/Total Olefin ratio is defined as the percentage molar ratio of 1-octene/(1-octene + ethylene). Ex. 1* shows a copolymer that has onset of gross melt fracture less than 40 N/cm$^2$ (4 x $10^6$ dyne/cm$^2$).

**N.M. = Not Measured.

The $^{13}$C NMR spectrum of Reference Example 3 (ethylene homopolymer) shows peaks which can be assigned to the $\alpha\delta^+$, $\beta\delta^+$ and methine carbons associated with a long chain branch. Long chain branching was determined using the method of Randall described earlier in this disclosure, wherein he states that "Detection of these resonances in high-density polyethylenes where no 1-olefins were added during the polymerization should be strongly indicative of the presence of long chain branching." Using the equation 141 from Randall (p. 292):

$$\text{Branches per 10,000 carbons} = [(1/3)(\alpha)/T_{Tot}] \times 10^4,$$

wherein $\alpha$= the average intensity of a carbon from a branch ($\alpha\delta^+$) carbon and $T_{Tot}$ = the total carbon intensity. The number of long chain branches in this sample was determined to be 3.4 per 10,000 total carbon atoms, or 0.34 long chain branches /1000 total carbon atoms using 300 MHz $^{13}$C NMR, and 2.2 per 10,000 total carbon atoms, or 0.22 long chain branches/1000 total carbon atoms using a 600 MHz $^{13}$C NMR.

Reference Examples 5, 6 and Comparative Examples 7-9

Reference Examples 5, 6 and Comparison Examples 7-9 with the same melt index were tested for rheology Comparison. Reference Examples 5 and 6 were the substantially linear ethylene/1-octene copolymers produced by the constrained geometry catalyst technology, as described in Reference Example 1, with the exception that lower ethylene concentrations were used for Examples 5 and 6 providing for higher $I_{10}/I_2$ ratios and consequently more long chain branching than Reference Example 1. Reference Examples 5 and 6 are stabilized as Reference Examples 1-4. Comparison Examples 7, 8 and 9 were conventional heterogeneous Ziegler polymerization blown film resins Dowlex™ 2045A, Attane™ 4201, and Attane™ 4403, respectively, all of which are ethylene/1-octene copolymers made by The Dow Chemical Company.

Comparative Example 7 was stablized with 200 ppm Irganox™ 1010, and 1600 ppm Irgafos™ 168 while Comparative Examples 8 and 9 were stablized with 200 ppm Irganox™ 1010 and 800 ppm PEPQ™. PEPQ™ is a trademark of Sandoz Chemical, the primary ingredient of which is believed to be tetrakis-(2,4-di-tertbutyl-phenyl)-4,4' biphenylphosphonite A comparison of the physical properties of each Reference Example and Comparative Example is listed in Table II.

Table II

| Property | Reference Ex. 5 | Reference Ex. 6 | Comparative Example 7 | Comparative Example 8 | Comparative Example 9 |
|---|---|---|---|---|---|
| $I_2$,g/10 minutes | 1 1 | | 1 | 1 | 0.76 |

Table II (continued)

| Property | Reference Ex. 5 | Reference Ex. 6 | Comparative Example 7 | Comparative Example 8 | Comparative Example 9 |
|---|---|---|---|---|---|
| Density, $g/cm^3$ | 0.92 | 0.902 | 0.92 | 0.912 | 0.905 |
| $I_{10}/I_2$ | 9.45 | 7.61 | 7.8 - 8 | 8.2 | 8.7 |
| Product $M_w$ | 73,800 | 96,900 | 124,600 | 122,500 | 135,300 |
| Product $M_n$ | 37,400 | 46,400 | 34,300 | 32,500 | 31,900 |
| Product $M_w/M_n$ | 1.97 | 2.09 | 3.5 - 3.8 | 3.8 | 3.8 - 4.2 |
| DSC Melt Peak (s), °C | 111 | 95 | 114, 118, 122 | 100, 116, 121 | 96, 116, 121 |

Surprisingly, even though the molecular weight distribution of Reference Examples 5 and 6 was narrow (that is, $M_w/M_n$ is low), the $I_{10}/I_2$ values were comparable or higher in comparison with Comparative Examples 7-9. A comparison of the relationship between $I_{10}/I_2$ vs. $M_w/M_n$ for some of the novel polymers described herein and conventional heterogeneous Ziegler polymers is given in Figure 2. The $I_{10}/I_2$ value for the novel polymers of the present invention was essentially independent of the molecular weight distribution, $M_w/M_n$ which is not true for conventional Ziegler polymerized resins.

Reference Example 5 and Comparative Example 7 with similar melt index and density (Table II) were also extruded via a Gas Extrusion Rheometer (GER) at 190°C using a 752 micrometers (0.0296 inch) diameter, 20:1 L/D die. The processing index (P.I.) was measured at an apparent shear stress of 21.5 $N/cm^2$ (2.15 x $10^6$ $dyne/cm^2$) as described previously. The onset of gross melt fracture can easily be identified from the shear stress vs. shear rate plot shown in Figure 3 where a sudden jump of shear rate occurs. A comparison of the shear stresses and corresponding shear rates before the onset of gross melt fracture is listed in Table III. It is particularly interesting that the PI of Reference Example 5 was more than 20 percent lower than the PI of Comparative Example 7 and that the onset of melt fracture or sharkskin for Reference Example 5 was also at a significantly higher shear stress and shear rate in comparison with the Comparative Example 7. Furthermore, the Melt Tension (MT) as well as Elastic Modulus of Reference Example 5 were higher than that of Comparative Example 7.

Note that each of the Comparative Examples 7-9 had three distinct melting peaks as measured by DSC, which is evidence of their heterogeneous branching distribution. In contrast, the polymers of Reference Examples 5 and 6 had a single melting peak as measured by DSC between the temperatures of -30 and 150°C which is evidence of the homogeneity of the polymers branching distribution. Furthermore, the single melting peaks of Reference Examples 5 and 6 indicate that each polymer was not a "blend" unlike the polymers disclosed in USP 5,218,071.

Table III

| Property | Reference Example 5 | Comparative Example 7 |
|---|---|---|
| $I_2$ (g/10 minutes) | 1 | 1 |
| $I_{10}/I_2$ | 9.45 | 7.8 - 8 |
| PI (kpoise) | 11 | 15 |
| Melt tension (gms) | 1.89 | 1.21 |
| Elastic modulus at 0.1 rad/sec ($dynes/cm^2$) | 2425 | 882.6 |
| OGMF*, critical shear rate (1/sec) | >1556 (not observed) | 936 |
| OGMF*, critical shear stress (MPa) | ≥0.452 (not observed) | 0.366 |
| OSMF**, critical shear rate (1/sec) | >1566 (not observed) | about628 |
| OSMF**, critical shear stress (MPa) | ≥0.452 (not observed) | about 0.25 |

*Onset of Gross Melt Fracture.

**Onset of Surface Melt Fracture.

Reference Example 6 and Comparison Example 9 had similar melt index and density, but Reference Example 6 had lower $I_{10}/I_2$ (Table IV). These polymers were extruded via a Gas Extrusion Rheometer (GER) at 190°C using a 752 micrometers (0.0296 inch) diameter, 20:1 L/D die. The processing index (PI) was measured at an apparent shear

stress of 21.5 $N/cm^2$ ($2.15 \times 10^6$ $dyne/cm^2$) as described previously.

Table IV

| Property | Reference Example 6 | Comparative Example 9 |
|---|---|---|
| $I_2$ (g/10 minutes) | 1 | 0.76 |
| $I_{10}/I_2$ | 7.61 | 8.7 |
| PI (kpoise) | 14 | 15 |
| Melt tension (gms) | 1.46 | 1.39 |
| Elastic modulus at 0.1 rad/sec ($dynes/cm^2$) | 1481 | 1921 |
| OGMF*, critical shear rate (1/sec) | 1186 | 652 |
| OGMF*, critical shear stress (MPa) | 0.431 | 0.323 |
| OSMF**, critical shear rate (1/sec) | about 764 | about 402 |
| OSMF**, critical shear stress (MPa) | 0.366 | 0.280 |

*Onset of Gross Melt Fracture.

**Onset of Surface Melt Fracture.

The onset of gross melt fracture can easily be identified from the shear stress vs. shear rate plot shown in Figure 4 where a sudden increase of shear rate occurs at an apparent shear stress of about $3.23 \times 10^6$ $dyne/cm^2$ (0.323 MPa). A comparison of the critical shear stresses and corresponding critical shear rates at the onset of gross melt fracture is listed in Table IV. The PI of Reference Example 6 is surprisingly about the same as Comparative Example 9, even though the $I_{10}/I_2$ is lower for Reference Example 6. The onset of melt fracture or sharkskin for Example 6 is also at a significantly higher shear stress and shear rate in comparison with the Comparative Example 9. Furthermore, it is also unexpected that the Melt Tension (MT) of Reference Example 6 is higher than that of Comparative Example 9, even though the melt index for Reference Example 6 is slightly higher and the $I_{10}/I_2$ is slightly lower than that of Comparative Example 9.

Comparative Examples 10-19

Batch ethylene/ 1-octene polymerizations were conducted under the following conditions:

Preparation of $[HNEt_3]^+[MeB(C_6F_5)_3]^-$

A 100 ml flask was charged with 1.00 gram of tris(pentafluorophenyl)boron (1.95 mmol) and 70 ml of anhydrous pentane. After dissolution, 1.5 ml of MeLi (1.4 M in diethyl ether, 2.1 mmol, 1.07 equiv) was added at 25°C via syringe. A milky white mixture formed immediately and, after several minutes, two phases formed. The mixture was stirred for 15 hr and then the upper layer decanted. The viscous lower layer was washed twice with 30 ml of pentane and concentrated in vacuo for 2 hours to give a clear, colorless, viscous oil. Under nitrogen, the oil was quenched with a 40 ml of an aqueous 0.5 M $HNEt_3Cl$ solution (20 mmol, 10 equiv) which had previously been cooled to 0°C. A white, gooey precipitate formed instantly. After two minutes, the solid was collected by filtration and washed twice with 20 ml of 0.5 M $HNEt_3Cl$ solution followed by two washings with distilled water. The solid was dehydrated under high vacuum at 25°C for 15 hours to give a powdery white solid (0.77 grams, 63 percent) which was identified as the desired triethylammonium tris(pentafluorophenyl)methylborate salt.

Preparation of $[HNEt_3]^+[(allyl)B(C_6F_5)3]^-$

A 100 ml flask was charged with 1.00 gram of tris(pentafluorophenyl)boron (1.95 mmol) and 40 ml of anhydrous pentane. After dissolution, 2.05 ml of (allyl)MgBr (1.0 M in diethyl ether, 2.05 mmol, 1.05 equiv) was added at 25°C via syringe. A cloudy white mixture formed immediately and, after several minutes, two phases formed. The mixture was stirred for 15 hr and then the upper layer decanted. The viscous lower layer was washed twice with 30 ml of pentane and concentrated in vacuo for 2 hours to give a clear, colorless, viscous oil. Under nitrogen, the oil was quenched with a 40 ml of an aqueous 0.5 M $HNEt_3Cl$ solution (20 mmol, 10 equiv) which had previously been cooled to 0°C. A gooey, white precipitate formed after several minutes. The solid was collected by filtration and washed twice

with 20 ml of 0.5 M $HNEt_3Cl$ solution followed by two washings with distilled water. The solid was dehydrated under high vacuum at 25°C for 15 hours to give a pasty white solid (0.39 grams, 30 percent) which was identified as the desired triethylammonium tris(pentafluorophenyl)allylborate salt.

Batch Reactor Polymerization Procedure

A 2 L stirred autoclave was charged with the desired amounts of a mixed alkane solvent (Isopar® E, available from Exxon Chemicals, Inc.) and 1-octene comonomer. The reactor was heated to the polymerization temperature. Hydrogen was added by differential pressure expansion from a 75 ml addition tank.

The term "hydrogen delta psi" in Table 1 represents the difference in pressure between the starting and final pressure in the hydrogen addition tank after adding hydrogen to the 2L reactor containing a total of approximately 1200 ml of solvent and 1-octene. The reactor was heated to the polymerization temperature and was saturated with ethylene to the desired pressure. For these experiments, a constant ethylene/solvent pressure of about 3.55 MPa (500 psig) at a temperature of 140°C corresponds to an ethylene concentration of about 8.4 percent by weight of the reactor contents. Metal complex and cocatalyst were mixed in a drybox by syringing the desired amount of 0.0050 M metal complex solution (in Isopar® E or toluene) into a solution of the cocatalyst (in Isopar® E or toluene). This solution was then transferred to a catalyst addition tank and injected into the reactor. The polymerization was allowed to proceed for the desired time and then the solution was drained from the bottom of the reactor and quenched with isopropanol. About 100 mg of a hindered phenolic antioxidant (Irganox® 1010, available from Ciba-Geigy corporation) was added and the polymer was air dried overnight. The residual solvent was removed in a vacuum oven overnight. The results are shown in Table V and VA:

Table V

| Comp. Ex. | $H_2$, kPa (psi) | 1-octene (gms) | Isopar E (gms) | yield (gms) | Effcny. (gm/gm Ti) | Aluminum (ppm) |
|---|---|---|---|---|---|---|
| 10A* | 344 (50) | 38 | 820 | 39.6 | 330,689 | 0 |
| 11A* | 172 (25) | 38 | 820 | 70.1 | 390,257 | 0 |
| 12A* | 241 (35) | 38 | 820 | 46.4 | 258,316 | 0 |
| 13A* | 207 (30) | 38 | 820 | 48.8 | 271,677 | 0 |
| 14A* | 241 (35) | 30 | 828 | 52.1 | 290,049 | 0 |
| 15A* | 186 (27) | 38 | 820 | 36.5 | 152,401 | 0 |
| 16A** | 179 (26) | 38 | 820 | 47.8 | 266,110 | 0 |
| 17B*** | 241 (35) | 40 | 818 | 19.7 | 41,127 | 6850 |
| 18B*** | 344 (50) | 40 | 818 | 19.7 | 41,127 | 6850 |
| 19B*** | 172 (25) | 40 | 818 | 18.3 | 38,204 | 7380 |

A = metal complex of $[(C_5Me_4)SiMe_2N(t\text{-}Bu)]\ TiMe_2$ (as in USP 5,064,802)
B = metal complex of $[(C_5Me_4)SiMe_2N(t\text{-}Bu)]\ TiCl_2$ (as in USP 5,026,798)
* = Cocatalyst of $[Et_3NH]$ + $[(allyl)B(C_6F_5)_3]$- (as in USP '802)
** = Cocatalyst of $[Et_3NH]$ + $[(Me)B(C_6F_5)_3]$- (as in USP '802)
*** = methyl aluminoxane (MAO) (as in USP '798)
Reactor temperature is constant at about 140°C
Ethylene/solvent pressure is constant at about 3.55 MPa (500 psig)
Run time is about 15 minutes

Table VA

| Comp. Ex. | µmoles complex | µmoles cocatalyst | Irganox 1010 (ppm) |
|---|---|---|---|
| 10A* | 2.5 | 2.5 | 2500 |
| 11A* | 3.75 | 3.75 | 1400 |

A = metal complex of $[(C_5Me_4)SiMe_2N(t\text{-}Bu)]\ TiMe_2$ (as in USP 5,064,802)
B = metal complex of $[(C_5Me_4)SiMe_2N(t\text{-}Bu)]\ TiCl_2$ (as in USP 5,026,798)
* = Cocatalyst of $[Et_3NH]$ + $[(allyl)B(C_6F_5)_3]$- (as in USP '802)

Table VA (continued)

| Comp. Ex. | µmoles complex | µmoles cocatalyst | Irganox 1010 (ppm) |
|---|---|---|---|
| 12A* | 3.75 | 3.75 | 2200 |
| 13A* | 3.75 | 3.75 | 2000 |
| 14A* | 3.75 | 3.75 | 1900 |
| 15A* | 5 | 5 | 2700 |
| 16A** | 3.75 | 3.75 | 2000 |
| 17B*** | 10 | 5000 | 5000 |
| 18B*** | 10 | 5000 | 5000 |
| 19B*** | 10 | 5000 | 5500 |

A = metal complex of $[(C_5Me_4)SiMe_2N(t\text{-}Bu)]\ TiMe_2$ (as in USP 5,064,802)
B = metal complex of $[(C_5Me_4)SiMe_2N(t\text{-}Bu)]\ TiCl_2$ (as in USP 5,026,798)
* = Cocatalyst of $[Et_3NH] + [(allyl)B(C_6F_5)_3]$- (as in USP '802)
** = Cocatalyst of $[Et_3NH] + [(Me)B(C_6F_5)_3]$- (as in USP '802)
*** = methyl aluminoxane (MAO) (as in USP '798)
Reactor temperature is constant at about 140°C
Ethylene/solvent pressure is constant at about 3.55 MPa (500 psig)
Run time is about 15 minutes

The samples were each extruded via a Gas Extrusion Rheometer (GER) at 190°C using 0.0296 inch (752 micrometers) diameter die (preferably 0.0143 inch (363 micrometers) diameter die for high flow polymers, for example 50-100 MI or greater) having L/D of 20:1 and entrance angle of 180 degrees, as shown in the attached drawing. The OGMF can easily be identified from the shear stress vs. shear rate plot where a sudden jump of shear rate occurs or when the surface of the extrudate becomes very rough or irregular, or from deep ridges which can be clearly detected by visual observation. OSMF is characterized by fine scale surface irregularities ranging from loss of surface gloss to the more severe form of matte or sharkskin which can easily be seen using microscopy at a magnification of 40X. Table VI displays the test results from Comparative Examples 10-19:

Table VI

| Comp. Ex. | $I_2$ (gm/10 min) | $I_{10}/I_2$ | $(I_{10}/I_2)$ - 4.63 | Measured $M_w/M_n$ | OGMF* Shear Rate ($sec^{-1}$) | OGMF* Shear Stress (MPa) |
|---|---|---|---|---|---|---|
| 10 | 4.52 | 5.62 | 0.99 | 1.856 | 706 | 0.344 |
| 11 | 0.67 | 6.39 | 1.76 | 1.834 | 118 | 0.323 |
| 12 | 2.24 | 5.62 | 0.99 | 1.829 | 300 | 0.323 |
| 13 | 2.86 | 5.60 | 0.97 | 1.722 | 397 | 0.323 |
| 14 | 3.25 | 5.66 | 1.03 | 1.827 | 445 | 0.302 |
| 15 | 1.31 | 5.67 | 1.04 | 1.718 | 227 | 0.302 |
| 16 | 1.97 | 5.7 | 1.07 | 1.763 | 275 | 0.302 |
| 17 | 0.36 | 12.98 | 8.35 | 5.934 | <29 | <0.086 |
| 18 | 0.40 | 13.34 | 8.71 | 5.148 | <11.08 | <0.086 |
| 19 | 0.13 | 13.25 | 8.62 | 6.824 | <10.39 | <0.086 |

Comparative Examples 10 - 16 were prepared using the catalyst composition as described in U.S. Patent 5,064,802 (Stevens et al.), as described above. Comparative Examples 17 - 19 were prepared using the catalyst composition described in U.S. Patent 5,026,798 (Canich), as described above. All of the Comparative Polymer Examples made using a batch reactor at an ethylene concentration of about 8.4 percent by weight of the reactor contents or more tested had onset of gross melt fracture at a shear stress of less than or equal to 0.344 MPa ($3.44 \times 10^6$ dyne/$cm^2$).

Interestingly, an ethylene concentration of about 8.4 percent is considered to be on the low side for a batch

polymerization procedure, since it limits the reaction kinetics and slows the polymerization process. Increasing the ethylene concentration in a batch reactor, as is taught in U.S. Patent 5,026,798 (Canich), where the calculated propylene reactor concentrations for these ten examples ranges from a low of about 12.6 percent (Example 1) to a high of about 79 percent (Example 6), by weight of the reactor contents, results in polymerization of polymers which do not have the novel structure discovered by Applicants, as the OGMF data in Table VI demonstrates. Furthermore, the $I_{10}/I_2$ ratio of such comparative polymers made using a batch reactor at relatively high ethylene concentrations increases as the molecular weight distribution, $M_w/M_n$, increases, as is expected based on conventional Ziegler polymerized polymers.

Reference Example 20 and Comparative Example 21

Blown film was fabricated from the two novel ethylene/1-octene polymers of Reference Examples 5 and 6 made in accordance with the present invention and from two comparative conventional polymers made according to conventional Ziegler catalysis. The blown films were tested for physical properties, including heat seal strength versus heat seal temperature (shown in Figure 5 for Reference Examples 20 and 22 and Comparative Examples 21 and 23), machine (MD) and cross direction (CD) properties (for example, tensile yield and break, elongation at break and Young's modulus). Other film properties such as dart, puncture, tear, clarity, haze, 20 degree gloss and block were also tested.

Blown Film Fabrication Conditions

The improved processing substantially linear polymers of the present invention produced via the procedure described earlier, as well as two comparative resins were fabricated on an Egan blown film line using the following fabrication conditions:

- 2 inch (5 cm) diameter extruder
- 3 inch (7.6 an) die
- 30 mil die gap
- 25 RPM extruder speed
- 460°F (238°C) melt temperature
- 1 mil gauge
- 2.7:1 Blow up ratio (12.5 inches (31.7 cm) layflat)
- 125 inches (31.7 cm) frost line height

The melt temperature was kept constant by changing the extruder temperature profile. Frost line height was maintained at 12.5 inches (31.7 cm) by adjusting the cooling air flow. The extruder output rate, back pressure and power consumption in amps were monitored throughout the experiment. The polymers of the present invention and the comparative polymers were all ethylene/l-octene copolymers. Table VII summarizes physical properties of the two polymers of the invention and for the two comparative polymers:

Table VII

| Property | Reference Example 20 | Comparative Example 21 | Reference Example 22 | Comparative Example 23 |
|---|---|---|---|---|
| $I_2$ (g/10 minutes) | 1 | 1 | 1 | 0.8 |
| Density (g/cm$^3$) | 0.92 | 0.92 | 0.902 | 0.905 |
| $I_{10}/I_2$ | 9.45 | about 8 | 7.61 | 8.7 |
| $M_w/M_n$ | 1.97 | about 4 | 2.09 | about 5 |

Tables VIII and IX summarize the film properties measured for blown film made from two of these four polymers:

Table VIII

| Blown film properties | | | | |
|---|---|---|---|---|
| Property | Example 20 MD | Example 20 CD | Comparative Example 21 MD | Comparative Example 21 CD |
| Tensile yield, MPa (psi) | 9.59 (1391) | 9.24 (1340) | 10.4 (1509) | 10.98 (1593) |
| Tensile break, MPa (psi) | 49.6 (7194) | 40.41 (5861) | 46.18 (6698) | 47.26 (6854) |
| Elongation, percent | 650 | 668 | 631 | 723 |
| Young's modulus, MPa (psi) | 130.9 (18,990) | 137.8 (19,997) | 159.2 (23,086) | 162.2 (23,524) |
| PPT* tear, gms | 5.9 | 6.8 | 6.4 | 6.5 |

*Puncture Propagation Tear
MD = machine direction
CD = cross direction

Table IX

| Property | Reference Example 20 | Comparative Example 21 |
|---|---|---|
| Dart A, grams | 472 | 454 |
| Puncture, grams | 235 | 275 |
| Clarity, percent transmittance | 71 | 68 |
| Haze, percent | 3.1 | 6.4 |
| 20 degree gloss | 114 | 81 |
| Block, grams | 148 | 134 |

During the blown film fabrication, it was noticed that at the same screw speed (25 rpm) and at the same temperature profile, the extruder back pressure was about 24.1 MPa (3500 psi) at about 58 amps power consumption for Comparative Example 21 and about 17.6 MPa (2550 psi) at about 48 amps power consumption for Example 20, thus showing the novel polymer of Reference Example 20 to have improved processability over that of a conventional heterogeneous Ziegler polymerized polymer. The throughput was also higher for Reference Example 20 than for Comparative Example 21 at the same screw speed. Thus, Reference Example 20 had higher pumping efficiency than Comparative Example 21 (that is, more polymer goes through per turn of the screw).

As Figure 5 shows, the heat seal properties of polymers of the present invention were improved, as evidenced by lower heat seal initiation temperatures and higher heat seal strengths at a given temperature, as compared with conventional heterogeneous polymers at about the same melt index and density.

Reference Examples 24 and 25

The polymer products of Reference Examples 24 and 25 were produced in a continuous solution polymerization process using a continuously stirred reactor, as described in USP 5,272,236. The metal complex [$C_5Me_4$ ($SiMe_2N^tBu$)]$TiMe_2$ was prepared as described in USP 5,272,236 and the cocatalysts used were tris(pentafluorophenyl) borane (B:Ti ratio of 2:1) and MMAO (A1:Ti ratio of 4:1). For Reference Example 24 the ethylene concentration in the reactor was about 1.10 percent and for Reference Example 25 the ethylene concentration in the reactor was about 1.02 percent (percentages based on the weight of the reactor contents). For each Reference Example, the reactor was run without hydrogen.

Additives (for example, antioxidants, pigments, etc.) can be incorporated into the interpolymer products either during the pelletization step or after manufacture, with a subsequent re-extrusion. Reference Examples 24 and 25 were each stabilized with 1250 ppm Calcium Stearate, 200 ppm Irganox 1010, and 1600 ppm Irgafos 168. Irgafos™ 168 is a phosphite stabilizer and Irganox™ 1010 is a hindered polyphenol stabilizer (for example, tetrakis [methylene 3-(3,5-ditert.butyl-4-hydroxyphenylpropionate)]methane. Both are trademarks of and made by Ciba-Geigy Corporation.

Reference Example 24 and Comparative Example 26

Reference Example 24 was an ethylene/1-octene elastic substantially linear ethylene polymer produced as described herein.

Comparative Example 26 was an ethylene/1-butene copolymer trademarked Exact™ made by Exxon Chemical containing butylated hydroxy toluene (BHT) and Irganox™ 1076 as polymeric stabilizers. Table X summarizes physical properties and rheological performance of Reference Example 24 and Comparative Example 26:

Table X

| Property | Reference Example 24 | Comparative Example 26 |
|---|---|---|
| $I_2$, g/10 minutes | 3.3 | 3.58 |
| Density, g/cm$^3$ | 0.870 | 0.878 |
| $I_{10}/I_2$ | 7.61 | 5.8 |
| $M_w/M_n$ | 1.97 | 1.95 |
| PI, kPoise | 3.2 | 8.4 |
| Elastic Modulus @ 0.1 rad/sec, dyne/cm$^2$ | 87.7 | 8.3 |
| OSMF*, critical shear rate, sec$^{-1}$ | 660 | 250 |

*Onset of surface melt fracture

Even though Reference Example 24 and Comparative Example 26 had very similar molecular weight distributions ($M_w/M_n$), $I_2$ and density, Reference Example 24 had a much lower processing index (PI) (38 percent of the PI of Comparative Example 26), a much higher shear rate at the onset of surface melt fracture (264 percent of shear rate at onset of OSMF) and an elastic modulus an order of magnitude higher than Comparative Example 26, demonstrating that Reference Example 24 had much better processability and higher melt elasticity than Comparative Example 26.

Elastic modulus is indicative of a polymer's melt stability, for example, more stable bubbles when making blown film and less neck-in during melt extrusion. Resultant physical properties of the finished film are also higher.

Onset of surface melt fracture is easily identified by visually observing the surface extrudate and noting when the extrudate starts losing gloss and small surface roughness is detected by using 40X magnification.

Dynamic shear viscosity of the polymers was also used to show differences between the polymers and measures viscosity change versus shear rate. A Rheometrics Mechanical Spectrometer (Model RMS 800) was used to measure viscosity as a function of shear rate. The RMS 800 was used at 190°C at 15 percent strain and a frequency sweep (that is, from 0.1-100 rad/sec) under a nitrogen purge. The parallel plates were positioned such that they had a gap of about 1.5-2 mm. Data for Reference Example 24 and Comparative Example 26 are listed in Table XI and graphically displayed in Figure 6.

Table XI

| Shear Rate, rad/sec | Dynamic Viscosity, poise, for Reference Example 24 | Dynamic Viscosity, poise, for Comparative Example 26 |
|---|---|---|
| 0.1 | 28290 | 18990 |
| 0.1585 | 28070 | 18870 |
| 0.2512 | 27630 | 18950 |
| 0.3981 | 27140 | 18870 |
| 0.631 | 26450 | 18840 |
| 1 | 25560 | 18800 |
| 1.585 | 24440 | 18690 |
| 2.512 | 23140 | 18540 |
| 3.981 | 21700 | 18310 |
| 6.31 | 20170 | 17960 |

Table XI (continued)

| Shear Rate, rad/sec | Dynamic Viscosity, poise, for Reference Example 24 | Dynamic Viscosity, poise, for Comparative Example 26 |
|---|---|---|
| 10 | 18530 | 17440 |
| 15.85 | 16790 | 16660 |
| 25.12 | 14960 | 15620 |
| 39.81 | 13070 | 14310 |
| 63.1 | 11180 | 12750 |
| 100 | 9280 | 10960 |

Surprisingly, Reference Example 24 showed a shear thinning behaviour, even though Reference Example 24 had a narrow molecular weight distribution. In contrast, Comparative Example 26 showed the expected behaviour of a narrow molecular weight distribution polymer, with a flatter viscosity/shear rate curve.

Thus, elastic substantially linear ethylene polymers made in accordance with the present invention (for example Reference Example 24) had lower melt viscosity than a typical narrow molecular weight distribution linear copolymer made by single site catalyst technology at the melt processing shear rate region of commercial interest. In addition, the novel elastic substantially linear ethylene polymers had a higher low shear/zero shear viscosity than the Comparative linear polymer, thus demonstrating that the copolymers of the invention had higher "green strength" which is useful for forming and maintaining blended compositions such as those used in the wire and cable coating industry, where the compounded materials must maintain their integrity at low or zero shear without segregating the components.

Reference Example 25 and Comparative Example 27

Reference Example 25 was an ethylene/1-octene elastic substantially linear ethylene polymer produced in a continuous solution polymerization process as described herein.

Comparative Example 27 was an ethylene/propene copolymer made by Mitsui PetroChemical Corporation and trademarked Tafmer™ P-0480. Table XII summarizes physical properties and rheological performance of these two polymers:

Table XII

| Property | Reference Example 25 | Comparative Example 27 |
|---|---|---|
| $I_2$, g/10 minutes | 1.01 | 1.1 |
| Density, g/cm$^3$ | 0.870 | 0.870 |
| $I_{10}/I_2$ | 7.62 | 6.06 |
| $M_w/M_n$ | 1.98 | 1.90 |
| PI, kPoise | 7.9 | 27.4 |
| Elastic Modulus @ 0.1 rad/sec, dyne/cm$^2$ | 964 | 567.7 |
| OSMF*, critical shear rate, sec$^{-1}$ | 781 | 105 |

*Onset of surface melt fracture

Even though Reference Example 25 and Comparative Example 27 had similarly narrow molecular weight distributions ($M_w/M_n$), $I_2$, and density, Reference Example 25 had a PI which was 28 percent of that of Comparative Example 27, a 743 percent of the shear rate at the onset of surface melt fracture and a higher elastic modulus than Comparative Example 27, demonstrating that Reference Example 24 had much better processability than Comparative Example 27. Onset of surface melt fracture is easily identified by visually observing the surface extrudate and noting when the extrudate starts losing gloss and small surface roughness is detected by using 40X magnification.

Reference Examples 28-37

Reference Examples 28-35 were ethylene/propene copolymers made using the constrained geometry catalyst

described herein and in a continuous solution polymerization process. Reference Examples 36 and 37 were ethylene/ 1-butene copolymers made using the constrained geometry catalyst described herein and in a continuous solution polymerization process. Reference Examples 28-37 each contained approximately 1250 ppm calcium strearate, 200 ppm Irganox™ 1010. These polymers did not, however, contain a secondary antioxidant (for example a phosphite). The low level of phenol (that is 200 ppm Irganox™ 1010) coupled with the lack of the secondary antioxidant may have contributed to the lower melt fracture performance of some of the polymers shown in Table XV. It is well known that thermally processing polyethylene polymers, especially in the presence of oxygen, can lead to oxidative crosslinking and extrusion variation, that is melt fracture. Table XIII and XIIIA describe the polymerization conditions and Table XIV describes the resultant polymer physical properties for Reference Examples 28-35:

Table XIII

| Reference Ex. | Reactor ethylene conc., weight percent | Estimated reactor PE conc., weight percent | Ethylene flow rate, kg/hr (lbs/hr) | Hydrogen/ ethylene ratio, mole percent |
|---|---|---|---|---|
| 28 | 5.3 | 6.0 | 1.45 (3.19) | 0.048 |
| 29 | 4.2 | 7.3 | 1.45 (3.19) | 0.024 |
| 30 | 4.0 | 8.9 | 1.45 (3.19) | 0.028 |
| 31 | 3.5 | 9.3 | 1.44 (3.18) | 0.024 |
| 32 | 2.5 | 10.6 | 1.45 (3.20) | 0.027 |
| 33 | 2.6 | 10.7 | 1.44 (3.18) | 0.007 |
| 34 | 1.3 | 10.5 | 1.45 (3.19) | 0.027 |
| 35 | 1.0 | 10.9 | 1.45 (3.19) | 0.010 |

Table XIIIA

| Reference Ex. | Reactor temp, °C | Ethylene Conversion, percent | Diluent/ ethylene ratio | Comonomer/olefin ratio* |
|---|---|---|---|---|
| 28 | 170 | 51 | 8.2 | 25.5 |
| 29 | 172 | 61 | 8.1 | 24.0 |
| 30 | 171 | 67 | 7.1 | 16.6 |
| 31 | 171 | 71 | 7.2 | 20.1 |
| 32 | 170 | 79 | 7.1 | 15.6 |
| 33 | 173 | 78 | 7.1 | 16.7 |
| 34 | 145 | 88 | 8.2 | 17.8 |
| 35 | 158 | 91 | 8.2 | 18.8 |

*Comonomer/total olefin ratio = percentage weight ratio of propene/(propene + ethylene).

Table XIV

| Reference Ex. | $I_2$, gms/10 minutes | $I_{10}/I_2$ | Density, gm/cm$^3$ | $M_w/M_n$ |
|---|---|---|---|---|
| 28 | 1.08 | 7.8 | 0.9176 | 2.00 |
| 29 | 1.02 | 8.8 | 0.9173 | 2.17 |
| 30 | 0.82 | 9.2 | 0.9175 | 2.08 |
| 31 | 0.79 | 9.4 | 0.9196 | 2.04 |
| 32 | 1.01 | 10.6 | 0.9217 | 2.09 |
| 33 | 0.83 | 12.4 | 0.9174 | 2.31 |
| 34 | 0.54 | 15.2 | 0.9201 | 2.12 |

Table XIV (continued)

| Reference Ex. | $I_2$, gms/10 minutes | $I_{10}/I_2$ | Density, gm/cm$^3$ | $M_w/M_n$ |
|---|---|---|---|---|
| 35 | 0.62 | 15.6 | 0.9185 | 2.32 |

Figure 7 graphically displays a best fit line drawn through a plot of the $I_{10}/I_2$ ratio for the ethylene/propene substantially linear polymers of Reference Examples 28-35 as a function of ethylene concentration in the polymerization reactor. Surprisingly, in contrast to conventional Ziegler polymerized polymers and in contrast to a batch polymerization using the same catalyst and relatively high ethylene concentrations, as the ethylene concentration in the reactor decreased using a continuous polymerization process, the $I_{10}/I_2$ ratio (indicating the amount of long chain branching in the novel substantially linear polymers) increased, even though the molecular weight distribution, $M_w/M_n$, remained very narrow and essentially constant at about 2.

Table XV shows the critical shear stress and critical shear rate at OGMF and OSMF for Reference Examples 28-35:

Table XV

| Reference Example | OSMF | OGMF |
|---|---|---|
| 28 (shear stress) | 2.15x10$^6$ dyne/cm$^2$ | 4.09x10$^6$ dyne/cm$^2$ |
| 28 (shear rate) | 129.8 sec$^{-1}$ | 668.34 sec$^{-1}$ |
| 29 (shear stress) | 1.94x10$^6$ dyne/cm$^2$ | 4.3x10$^6$ dyne/cm$^2$ |
| 29 (shear rate) | 118.8 sec$^{-1}$ | 652.1 sec$^{-1}$ |
| 30 (shear stress) | 1.08x10$^6$ dyne/cm$^2$ | 4.3x10$^6$ dyne/cm$^2$ |
| 30 (shear rate) | 86.12 sec$^{-1}$ | 650.7 sec$^{-1}$ |
| 31 (shear stress) | 1.08x10$^6$ dyne/cm$^2$ | >4.3x10$^6$ dyne/cm$^2$ |
| 31 (shear rate) | 90.45 sec$^{-1}$ | >6.83 sec$^{-1}$ |
| 32 (shear stress) | 1.94x10$^6$ dyne/cm$^2$ | 3.66x10$^6$ dyne/cm$^2$ |
| 32 (shear rate) | 1782 178.2 sec$^{-1}$ | 673 sec$^{-1}$ |
| 33 (shear stress) | 2.15x10° dyne/cm$^2$ | about 3.23x10$^6$ dyne/cm$^2$ |
| 33 (shear rate) | 235.7 sec$^{-1}$ | about 591 sec$^{-1}$ |
| 34 (shear stress) | 1.94x10$^6$ dyne/cm$^2$ | 3.44x10$^6$ dyne/cm$^2$ |
| 34 (shear rate) | 204.13 sec$^{-1}$ | 725.23 sec$^{-1}$ |
| 35 (shear stress) | 1.94x10$^6$ dyne/cm$^2$ | about 3.26x10$^6$ dyne/cm$^2$ |
| 35 (shear rate) | 274.46 sec$^{-1}$ | 637.7 sec$^{-1}$ |

Tables XVI and XVIA describe the polymerization conditions and Table XVII describes the resultant polymer physical properties for ethylene/1-butene copolymer Reference Examples 36 and 37:

Table XVI

| Reference Ex. | Reactor ethylene conc., weight percent | Reactor PE conc., weight percent | Ethylene flow rate, kg/hr (lbs/hr) | Hydrogen/ ethylene ratio, mole percent |
|---|---|---|---|---|
| 36 | 5.3 | 5.8 | 1.45 (3.20) | 0.035 |
| 37 | 1.3 | 10.8 | 1.45 (3.19) | 0.010 |

Table XVIA

| Reference Ex. | Reactor temp, °C | Diluent/ Ethylene Ratio | Ethylene Conversion, percent | Comonomer/ olefin ratio* |
|---|---|---|---|---|
| 36 | 170 | 8.1 | 51 | 24.2 |
| 37 | 152 | 8.2 | 87 | 17.1 |

*Comonomer/total olefin ratio = percentage weight ratio of 1-butene/ (1-butene + ethylene).

Table XVII

| Reference Ex. | $I_2$, gms/10 minutes | $I_{10}/I_2$ | Density, gm/cm$^3$ | $M_w/M_n$ |
|---|---|---|---|---|
| 36 | 0.59 | 7.5 | 0.9201 | 2.06 |
| 37 | 1.03 | 11.4 | 0.9146 | 2.22 |

The data in Tables XVI, XVIA and XVII show that as the ethylene concentration in the reactor decreased while using the constrained geometry catalyst as described herein, the $I_{10}/I_2$ ratio of the novel substantially linear polymers increased, indicating the amount of long chain branching in the novel polymers, even while the molecular weight distribution, $M_w/M_n$, of the novel polymers remained narrow at essentially about 2.

Table XVIII shows the critical shear stress and critical shear rate at OGMF and OSMF for Reference Examples 36 and 37:

Table XVIII

| Reference Example | OSMF | OGMF |
|---|---|---|
| 36 (shear stress) | $1.94 \times 10^6$ dyne/cm$^2$ | $4.09 \times 10^6$ dyne/cm$^2$ |
| 36 (shear rate) | 52.3 sec$^{-1}$ | 234.45 sec$^{-1}$ |
| 37 (shear stress) | $1.08 \times 10^6$ dyne/cm$^2$ | $3.01 \times 10^6$ dyne/cm$^2$ |
| 37 (shear rate) | 160.5 sec$^{-1}$ | 493.9 sec$^{-1}$ |

Comparative Example 38

An ethylene polymer, as described in USP 5,218,071, was polymerized according to the teachings of that patent and tested for melt fracture properties.

All catalyst manipulations were performed under anhydrous, anaerobic conditions in an inert atmosphere box. The solvents, toluene and Isopar™ E, and the comonomer, octene-1, were thoroughly dried and deaerated beore use. Poly(methylalumioxane) (PMAO) was obtained from AKZO Chemicals Inc. as a 1.55 M Al in toluene solution and used as received. The metallocene ethylenebis(indenyl)hafnium dichloride was obtained from Schering A.G. as a solid. This metallocene is known to contain 0.2 weight percent Zirconium contamination. A slurry of the hafnium complex was prepared from this solid (0.253 g; 0.5 mmol; 0.010 M) and 50 mL toluene. The slurry was thoroughly stirred overnight prior to use.

A 3.78 L (one gallon), stirred autoclave reactor was charged with Isopar™ E (2.1 L) and octene-1 (175 mL) and the contents heated to 80°C. Upon reaching temperature, a sample of the PMAO (26.8 mL; 40.0 mmol Al) in toluene was pressured into the reactor from a 75 mL cylinder using a nitrogen flush. After a few minutes, an aliquot of the metallocene slurry (4.0 mL; 0.040 mmol; Al:Hf=1000:1) was flushed into the reactor in a similar manner. Ethylene was continuously supplied to the reactor at a rate of 17 g/min to initiate polymerization. The ethylene flow was maintained for ten minutes and during the latter part of the polymerization the flow rate slowed as the pressure approached a setpoint of 791 Pa (100 psig). After this time, the ethylene supply was shut off and the contents of the reactor transferred by pressure to a glass resin kettle containing a small amount of antioxidant (0.30 g Irgafos™ 168; 0.07 g Irganox™ 1010). The solvent was slowly allowed to evaporate and the polymer obtained form the solution was dried under vacuum at 50°C for 72 h. The yield of the product was 159 g or an efficiency of 3975 g PE/mmol Hf.

The recovered polymer had a $M_w$=1.341 x $10^5$, $M_n$=5.65 x $10^4$, $M_w/M_n$=2.373, density (measured in a gradient column)=0.8745 g/cm$^3$, $I_2$=0.63 g/10 min., $I_{10}/I_2$=15.9, and had two distinct melting peaks (as shown in Figure 8). The polymer showed two peak melting points, one at 30.56°C and the other at 102.55°C. The polymer also showed two peak crystallization points, one at 9.47°C and the other at 81.61°C.

Melt fracture was determined using the GER at 190°C with a die having a diameter of 0.0145 inches and an L/D=20.

## Claims

1. Aluminum catalyst residue containing bulk polymer including homogeneous ethylene homo- or interpolymers which interpolymers are formed with at least one α-olefin, which homo- or interpolymers have 0.01-3 long chain branches per 1000 carbon atoms, have a melt flow ratio, $I_{10}/I_2$, ≥5.63, have a molecular weight distribution, $M_w/M_n$, of from 1.5 to 2.5, and have a single melting point as determined by differential scanning calory metry between -30°C and 150°C, characterized in that the bulk polymer contains less than 20 ppm aluminum.

2. The bulk polymer of claim 1, containing less than 10 ppm aluminum.

3. The bulk polymer of claim 1 or claim 2, containing less than 5 ppm aluminum.

4. The bulk polymer of any one of the preceding claims, having a critical shear race at the onset of surface melt fracture at least 50 percent greater that the critical shear rate at the onset of surface melt fracture of a linear ethylene polymer having an $t_2$, $M_w/M_n$ and density within 10 percent of the ethylene homo- or interpolymer.

5. The bulk polymer of any one of the preceding claims, having a critical shear stress at the onset of gross melt fracture greater than (4 x $10^6$ dyne/$cm^2$) 40 N/$cm^2$.

6. The bulk polymer of any one of the preceding claims, wherein the ethylene homo- or interpolymer has a $M_w/M_n$ of from 1.7 to 2.3.

7. A fabricated article comprising the bulk polymer of any one of the preceding claims.

8. The fabricated article of claim 7, wherein the article is a film, a fiber, a sheet, a woven fabric, a nonwoven fabric, a molded article or a wire and cable coating.

9. The fabricated article of claim 7 or claim 8, being a blown film.

10. The fabricated article of claim 9, wherein the bulk polymer has a density from 0.90 to 0.92 g/$cm^3$.

11. The fabricated article of claim 10, wherein the film has a heat seal strength equal to or higher than a film made from a heterogeneous Ziegler polymerized polymer at the same heat seal temperature, wherein the melt index, molecular weight distribution and density of the heterogeneous Ziegler polymerized polymer and the ethylene homo- or interpolymer as defined in claim 1 are within 10 percent of one another.

## Patentansprüche

1. Aluminiumkatalysatorrückstand enthaltende Polymermasse, die homogene Ethylen-Homo- oder -Interpolymere enthält, wobei die Interpolymere aus wenigstens einem α-Olefin gebildet sind, wobei die Homo- oder Interpolymere 0,01 bis 3 Langkettenverzweigungen pro 1000 Kohlenstoffatome aufweisen, ein Schmelzflussverhältnis, $I_{10}/I_2$, ≥ 5,631 besitzen, eine Molekulargewichtsverteilung, $M_w/M_n$, von 1,5 bis 2,5 besitzen und einen einzelnen Schmelzpunkt besitzen, wie bestimmt durch Differenzialscanningkalorimetrie zwischen -30 °C und 150 °C,
dadurch gekennzeichnet,
dass die Polymermasse weniger als 20 ppm Aluminium enthält.

2. Polymermasse nach Anspruch 1, die weniger als 10 ppm Aluminium enthält.

3. Polymermasse nach Anspruch 1 oder 2, die weniger als 5 ppm Aluminium enthält.

4. Polymermasse nach einem der vorhergehenden Ansprüche, die eine um wenigstens 50 % größere kritische Scherrate bei dem Einsetzen von Oberflächenschmelzbruch besitzt als die kritische Scherrate bei dem Einsetzen von Oberflächenschmelzbruch eines linearen Ethylenpolymers, das ein $I_2$, $M_w/M_n$ und eine Dichte innerhalb 10 % des

Ethylen-Homo- oder -Interpolymers besitzt.

5. Polymermasse nach einem der vorhergehenden Ansprüche, die eine kritische Scherspannung bei dem Einsetzen von Gesamtschmelzbruch von größer als 40 $N/cm^2$ (4 x $10^6$ $dyne/cm^2$) besitzt.

6. Polymermasse nach einem der vorhergehenden Ansprüche, wobei das Ethylen-Homo- oder -Interpolymer ein $M_w/M_n$ von etwa 1,7 bis 2,3 besitzt.

7. Hergestellter Gegenstand umfassend die Polymermasse nach einem der vorhergehenden Ansprüche.

8. Hergestellter Gegenstand nach Anspruch 7, wobei der Gegenstand eine Folie, eine Faser, ein Bogen, ein Gewebe, ein Textilverbundstoff, ein Formkörper oder ein Draht- und Kabelüberzug ist.

9. Hergestellter Gegenstand nach Anspruch 7 oder 8, der eine Blasfolie ist.

10. Hergestellter Gegenstand nach Anspruch 9, wobei die Polymermasse eine Dichte von 0,90 bis 0,92 $g/cm^3$ besitzt.

11. Hergestellter Artikel nach Anspruch 10, wobei die Folie eine Verschweißfestigkeit gleich oder höher als eine Folie besitzt, die aus einem heterogenen Ziegler-polymerisierten Polymer bei derselben Verschweißtemperatur hergestellt wurde, wobei der Schmelzindex, die Molekulargewichtsverteilung und die Dichte des heterogenen Ziegler-polymerisierten Polymers und des Ethylen-Homo- oder-Interpolymers, wie in Anspruch 1 definiert, innerhalb 10 % voneinander sind.

## Revendications

1. Polymère en masse contenant un résidu de catalyseur à l'aluminium et comprenant des homo- ou interpolymères d'éthylène homogènes, lesquels interpolymères sont formés avec au moins une $\alpha$-oléfine, lesquels homo- ou interpolymères ont de 0,01 à 3 ramifications à chaînes longues pour 1000 atomes de carbone, un rapport de fluidité à chaud, $I_{10}/I_2$, $\geq$ 5,63, une distribution des masses moléculaires, $M_w/M_n$, de 1,5 à 2,5 et un point de fusion unique déterminé par analyse calorimétrique différentielle entre -30°C et 150°C, caractérisé en ce que le polymère en masse contient moins de 20 ppm d'aluminium.

2. Polymère en masse selon la revendication 1, contenant moins de 10 ppm d'aluminium.

3. Polymère en masse selon la revendication 1 ou 2, contenant moins de 5 ppm d'aluminium.

4. Polymère en masse selon l'une quelconque des revendications précédentes, ayant une vitesse de cisaillement critique au commencement de la fracture superficielle à l'état fondu supérieure d'au moins 50% à la vitesse de cisaillement critique au commencement de la fracture superficielle à l'état fondu d'un polymère d'éthylène linéaire, ayant un $I_2$, un $M_w/M_n$ et une masse volumique qui se situent à plus ou moins 10% de ceux de l'homo- ou interpolymère d'éthylène.

5. Polymère en masse selon l'une quelconque des revendications précédentes, ayant une contrainte de cisaillement critique au commencement de la fracture totale à l'état fondu supérieure à 40 $N/cm^2$ (4 x $10^6$ $dyne/cm^2$).

6. Polymère en masse selon l'une quelconque des revendications précédentes, dans lequel l'homo- ou interpolymère d'éthylène a un $M_w/M_n$ de 1,7 à 2,3.

7. Article manufacturé comprenant le polymère en masse selon l'une quelconque des revendications précédentes.

8. Article manufacturé selon la revendication 7, dans lequel l'article est un film, une fibre, une feuille, un tissu, un non-tissé, un article moulé ou un revêtement pour fils et câbles.

9. Article manufacturé selon la revendication 7 ou 8, qui est un film soufflé.

10. Article manufacturé selon la revendication 9, dans lequel le polymère en masse a une masse volumique de 0,90 à 0,92 $g/cm^3$.

**11.** Article manufacturé selon la revendication 10, dans lequel le film a une résistance au thermosoudage supérieure ou égale à celle d'un film produit à partir d'un polymère hétérogène à polymérisation Ziegler à la même température de thermosoudage, dans lequel les indices de fluidité, les distributions des masses moléculaires et les masses volumiques du polymère hétérogène à polymérisation Ziegler et de l'homo- ou interpolymère d'éthylène tel que défini dans la revendication 1 se situent à plus ou moins 10% les uns des autres.

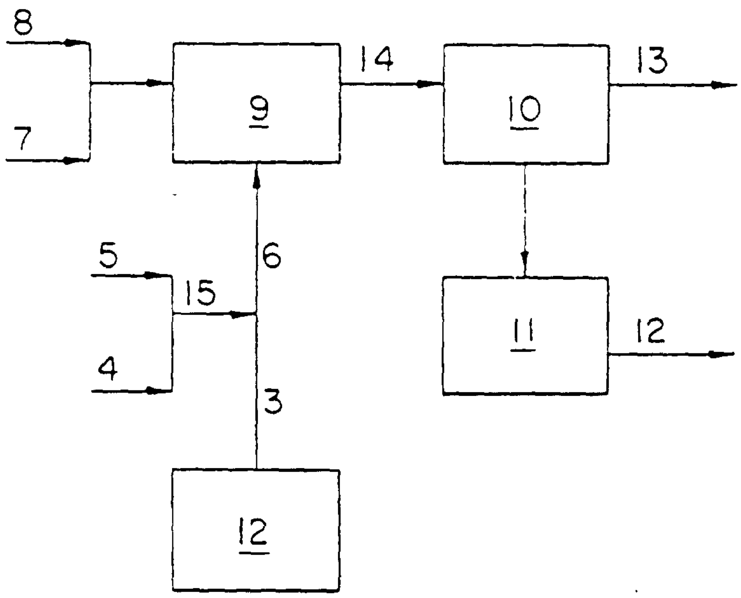


FIG.1

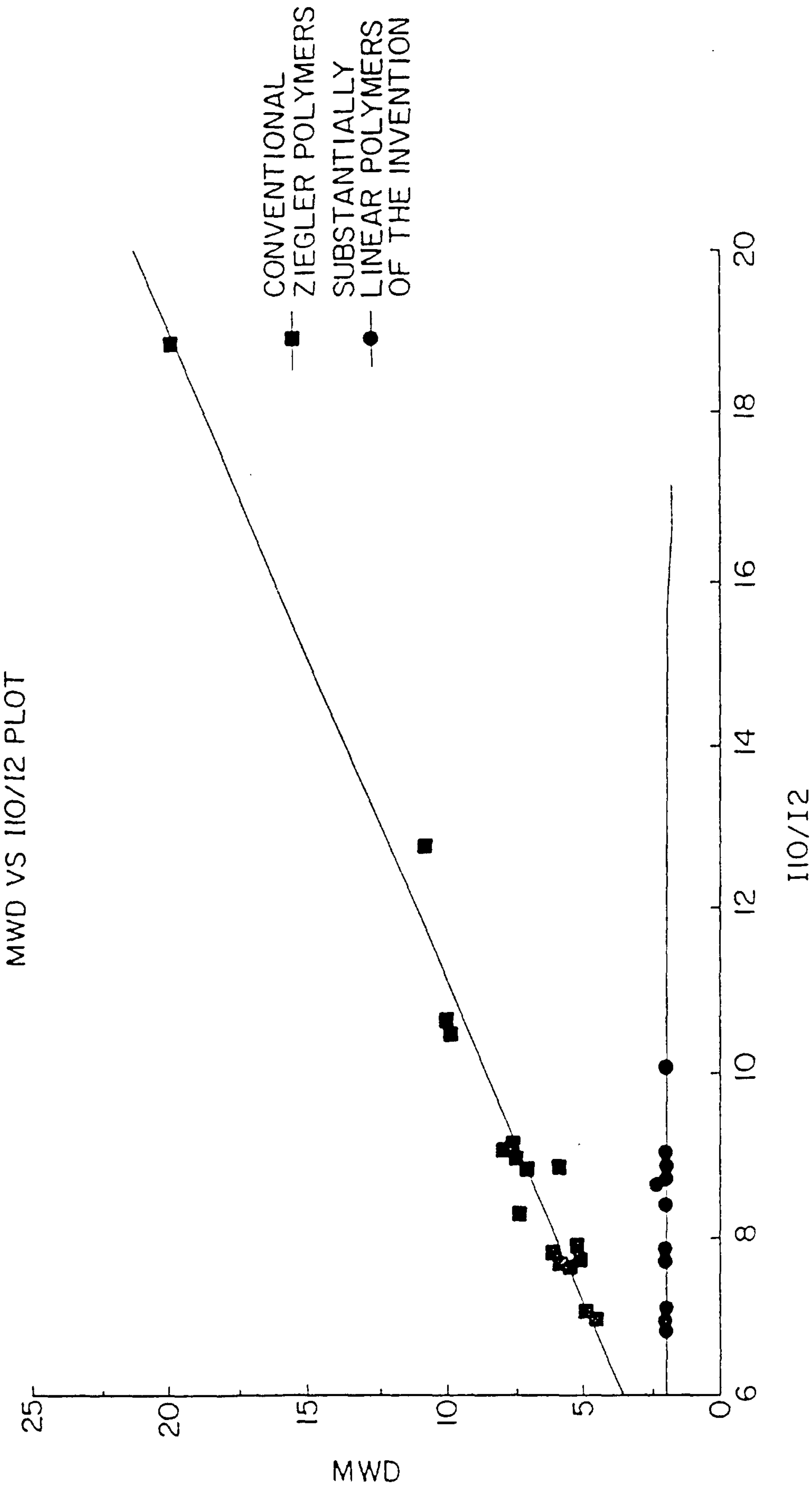
MWD VS I10/I2 PLOT
MWD
25
20
15
10
5
0
6
8
10
12
14
16
18
20
I10/I2
CONVENTIONAL ZIEGLER POLYMERS
SUBSTANTIALLY LINEAR POLYMERS OF THE INVENTION

FIG. 2

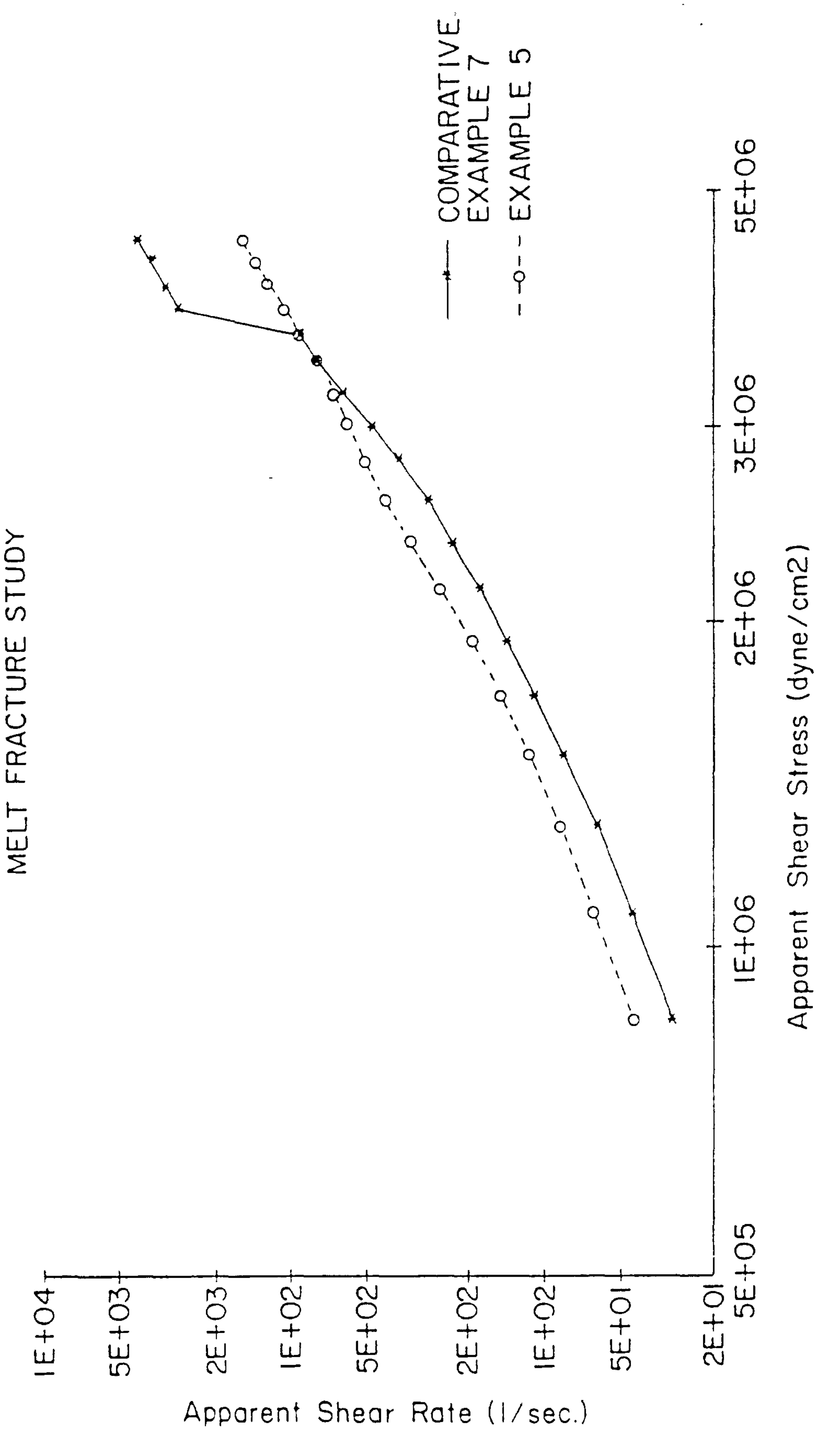
MELT FRACTURE STUDY
COMPARATIVE EXAMPLE 7
EXAMPLE 5
Apparent Shear Rate (1/sec.)
1E+04
5E+03
2E+03
1E+02
5E+02
2E+02
1E+02
5E+01
2E+01
5E+05
1E+06
2E+06
3E+06
5E+06
Apparent Shear Stress (dyne/cm2)

FIG.3

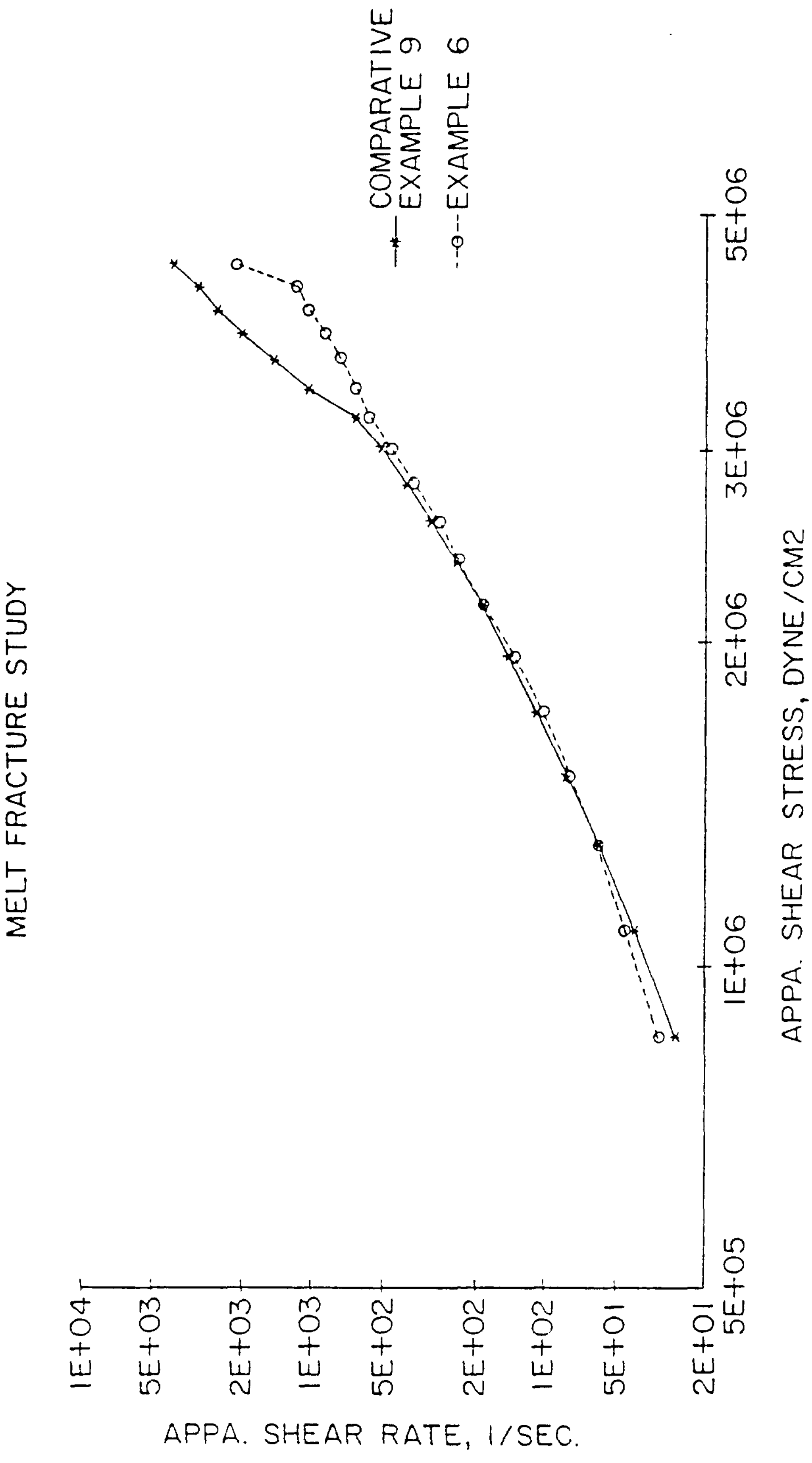
MELT FRACTURE STUDY
COMPARATIVE EXAMPLE 9
EXAMPLE 6
APPA. SHEAR STRESS, DYNE/CM2
5E+05
1E+06
2E+06
3E+06
5E+06
APPA. SHEAR RATE, 1/SEC.
1E+04
5E+03
2E+03
1E+03
5E+02
2E+02
1E+02
5E+01
2E+01

FIG.4

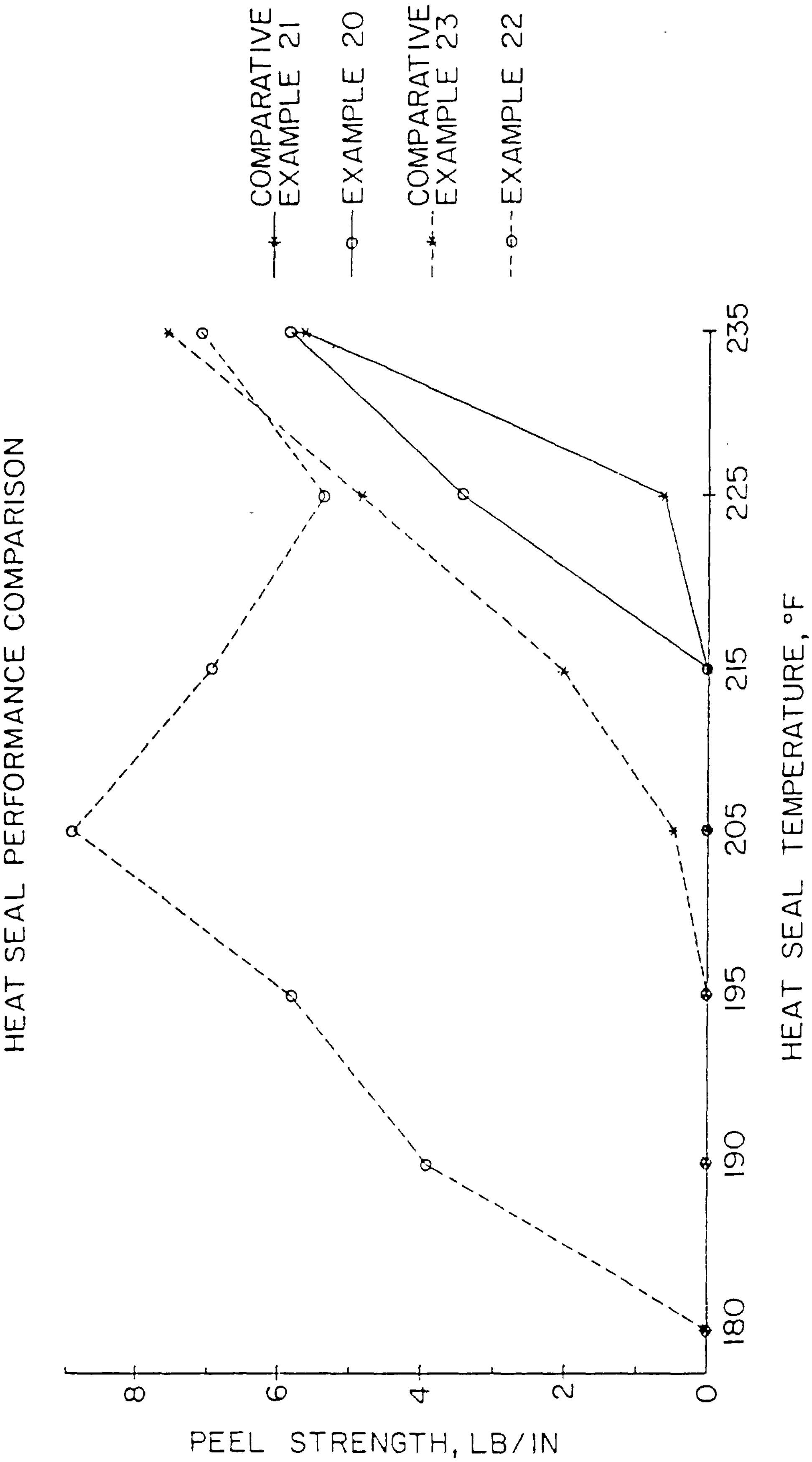
HEAT SEAL PERFORMANCE COMPARISON
COMPARATIVE EXAMPLE 21
EXAMPLE 20
COMPARATIVE EXAMPLE 23
EXAMPLE 22
PEEL STRENGTH, LB/IN
0
2
4
6
8
180
190
195
205
215
225
235
HEAT SEAL TEMPERATURE, °F

FIG.5

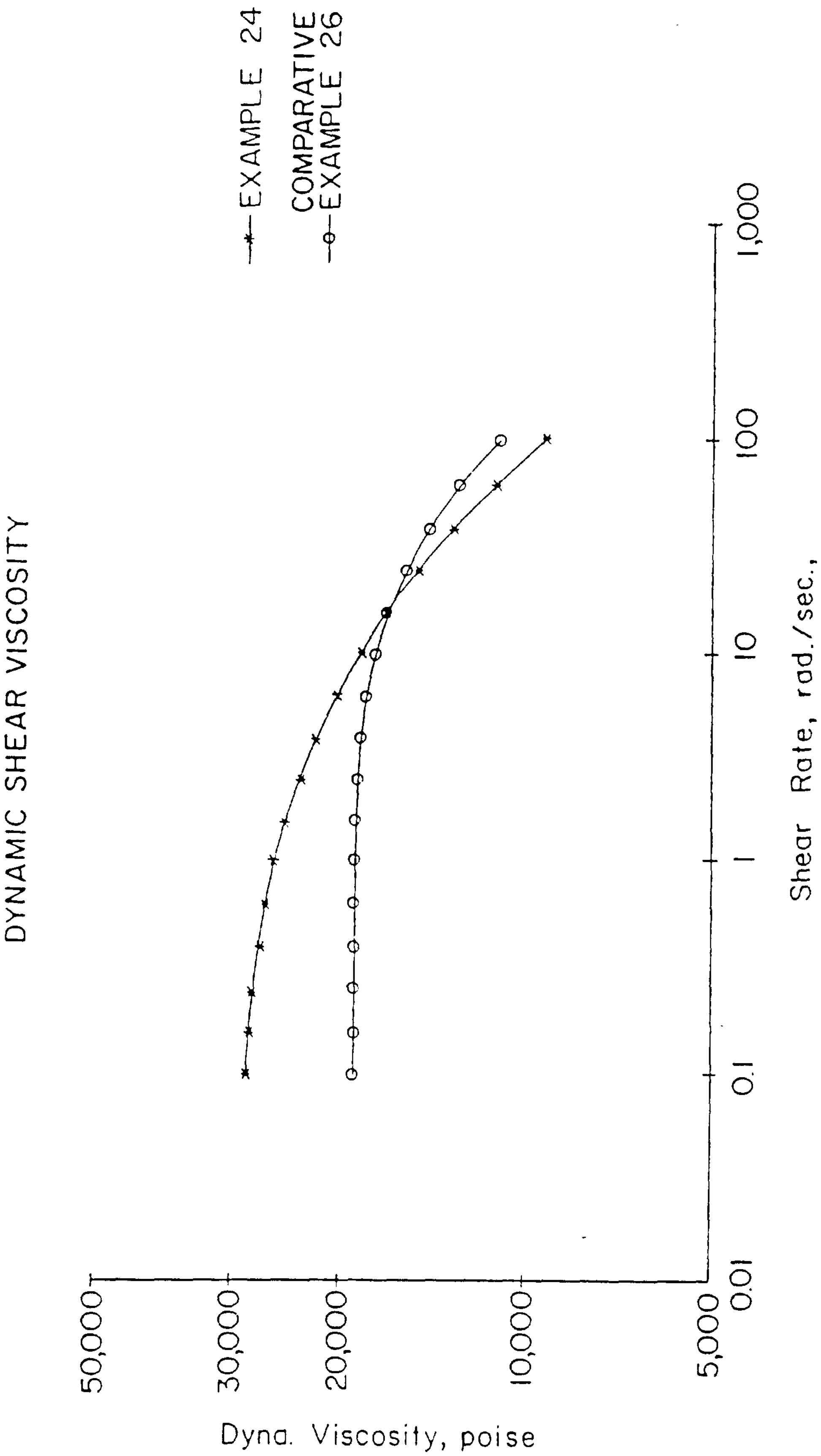
DYNAMIC SHEAR VISCOSITY
EXAMPLE 24
COMPARATIVE EXAMPLE 26
50,000
30,000
20,000
10,000
5,000
0.01
0.1
1
10
100
1,000
Dyna. Viscosity, poise
Shear Rate, rad./sec.,

FIG.6

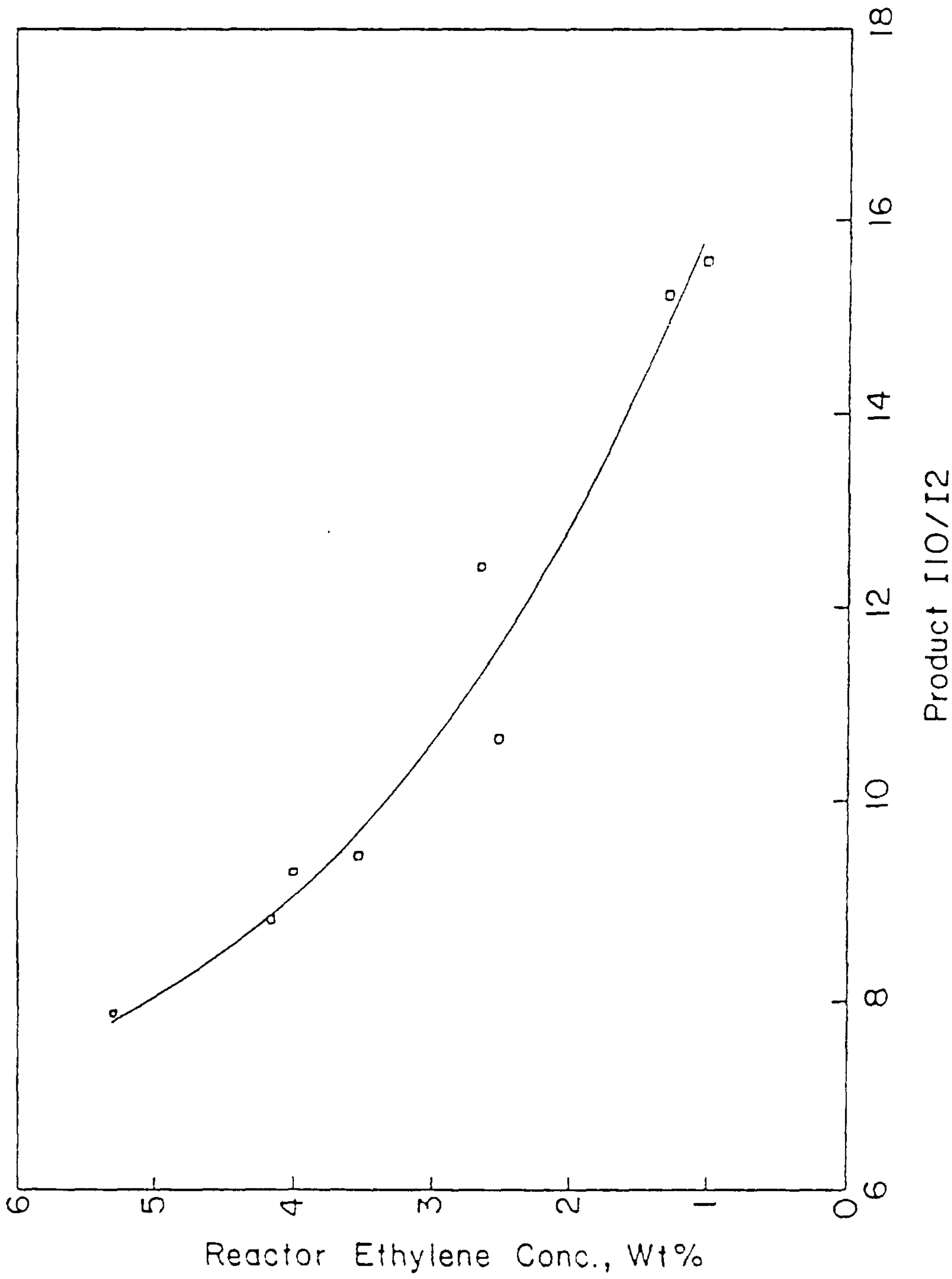
Reactor Ethylene Conc., Wt%
0
1
2
3
4
5
6
Product I10/I2
6
8
10
12
14
16
18

FIG.7

FIG.8

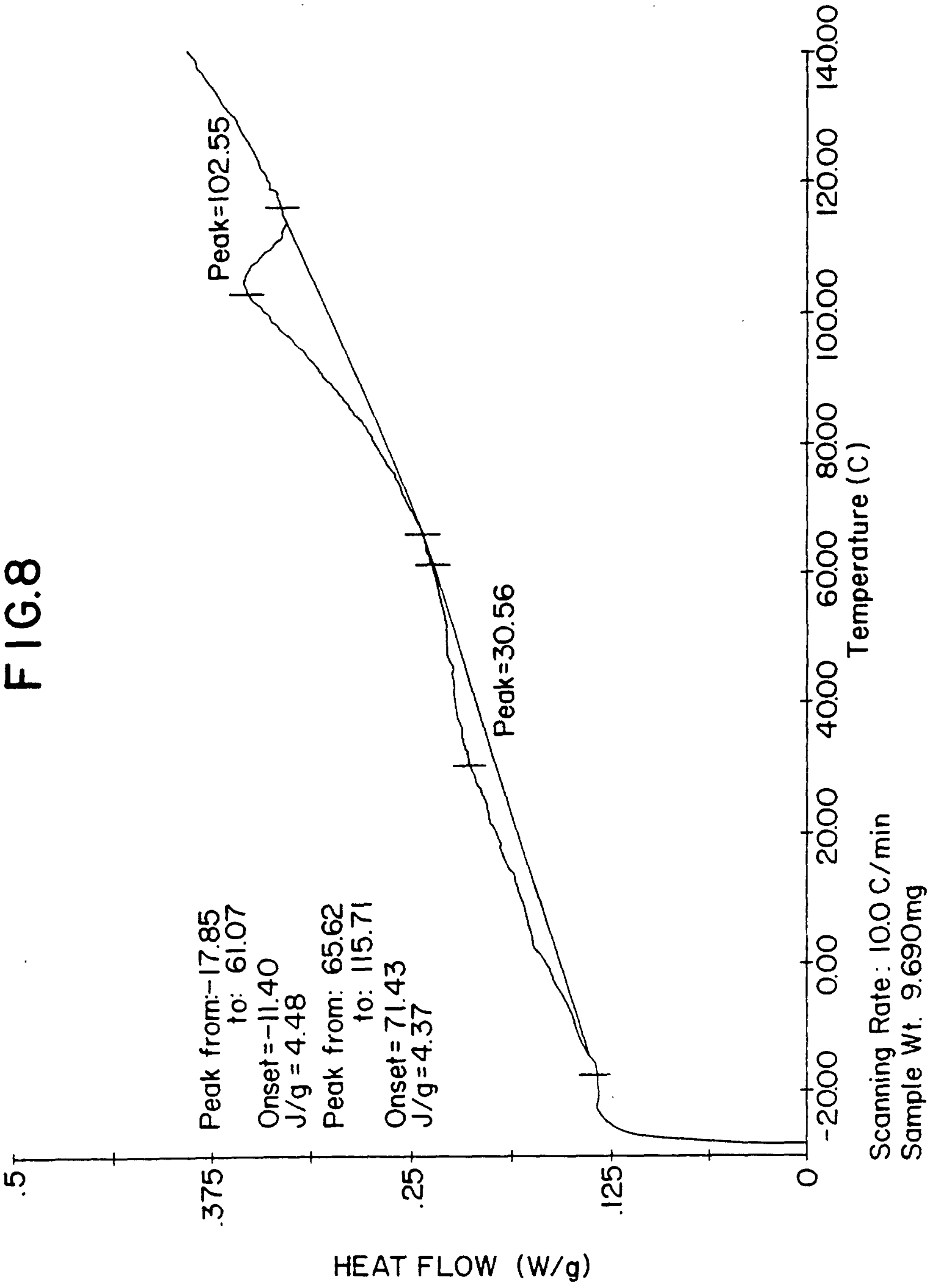
Peak from:-17.85
to: 61.07
Onset=-11.40
J/g = 4.48
Peak from: 65.62
to: 115.71
Onset= 71.43
J/g=4.37
Peak=30.56
Peak=102.55
HEAT FLOW (W/g)
.5
.375
.25
.125
0
-20.00
0.00
20.00
40.00
60.00
80.00
100.00
120.00
140.00
Temperature (C)
Scanning Rate: 10.0 C/min
Sample Wt. 9.690mg

FIG.9

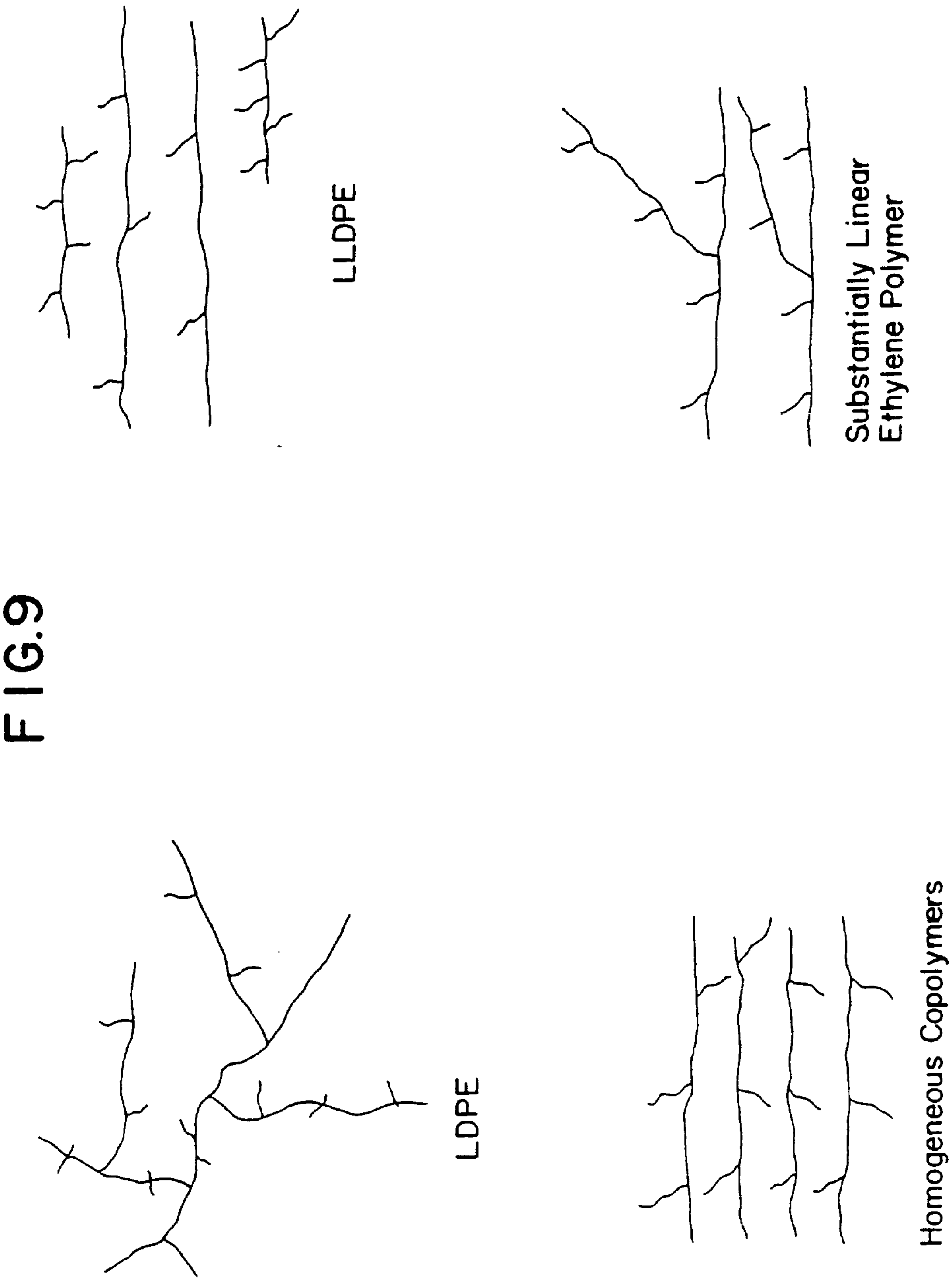
LLDPE
Substantially Linear Ethylene Polymer
LDPE
Homogeneous Copolymers